# EUROPÄISCHE PATENTSCHRIFT

(11) **EP 2 964 549 B1**
(45) Veröffentlichungstag und Bekanntmachung des Hinweises auf die Patenterteilung: **21.09.2016**
(21) Anmeldenummer: 14721258.3
(22) Anmeldetag: 17.04.2014
(51) Int. Cl.: B65G 1/137

(54) **LAGER- UND KOMMISSIONIERSYSTEM SOWIE VERFAHREN ZUM UMORGANISIEREN EINES ARTIKELSORTIMENTS**
WAREHOUSE AND PICKING SYSTEM AND METHOD FOR REORGANIZING A RANGE OF ARTICLES
SYSTÈME DE STOCKAGE ET DE PRÉPARATION DE COMMANDES ET PROCÉDÉ DE RÉORGANISATION D'UNE GAMME D'ARTICLES

(30) Priorität: 17.04.2013 DE 102013103869
(43) Veröffentlichungstag der Anmeldung: 13.01.2016
(73) Patentinhaber: SSI Schäfer Peem GmbH, 8051 Graz (AT)
(72) Erfinder: WINKLER, Max, A-8010 Graz (AT)
(74) Vertreter: Witte, Weller & Partner Patentanwälte mbB
(86) Internationale Anmeldenummer: PCT/EP2014/057892
(87) Internationale Veröffentlichungsnummer: WO 2014/170433

(56) Entgegenhaltungen:
- EP-A1- 1 862 406
- WO-A1-2010/046809
- DE-U1-202009 009 773

## Beschreibung

Die vorliegende Erfindung betrifft ein Lager- und Kommissioniersystem sowie ein Verfahren zum Umorganisieren eines Artikelsortiments in Abhängigkeit von Zugriffshäufigkeiten gemäß den Oberbegriffen der Ansprüche 1 und 10.

Ein entsprechendes System und ein entsprechendes Verfahren werden in der WO 2010/046809 A1 offenbart. Die EP 1 862 406 A1 offenbart ein Verfahren zum Kommissionieren von Artikeln in einem Kommissioniersystem und eine Zwischenlagervorrichtung mit Aufnahmeplätzen, wobei die Regale von Hand in einem Regallager bewegt werden, um Aufträge einzusammeln.

Heutzutage wird grob zwischen zwei verschiedenen Prinzipien unterschieden, gemäß denen Kommissionieraufträge abgearbeitet werden können. Es wird entweder nach dem "Mann-zur-Ware"-Prinzip oder nach dem "Ware-zum-Mann"-Prinzip kommissioniert. Die vorliegende Erfindung kann gemäß jedem der Prinzipien, auch in Kombination, betrieben werden, wobei eine Kommissionierperson soweit wie möglich unterstützt wird. Die Kommissionierung kann manuell oder automatisiert erfolgen.

Beim klassischen manuellen Kommissionieren wird häufig nach dem Prinzip "Mann-zur-Ware" kommissioniert. Dabei bewegt sich die Kommissionierperson zum Zwecke des Kommissionierens in einem (dezentralen) Arbeitsbereich, wobei Bereitstellungseinheiten (z.B. Lagerbehälter, Tablare, Kartons, Paletten, etc.) an stationären Orten innerhalb eines Lagers in Form von Zugriffsplätzen bevorratet und bereitgestellt werden. In Übereinstimmung mit einem Kommissionierauftrag werden kundenseitig vorgegebene Artikel nach Typ und Anzahl zusammengestellt, indem sie aus einem Artikelsortiment eingesammelt werden. Unter einem Auftrag bzw. einem Kommissionierauftrag versteht man beispielsweise eine Kundenbestellung, die sich aus einer oder mehreren Auftragspositionen (Auftragszeilen), die sich aus einer jeweiligen Menge (Entnahmemenge) eines Artikels bzw. einem Artikeltyp zusammensetzen. Die Kommissionierperson entnimmt den oder die gewünschten Artikel und legt sie in eine Sammeleinrichtung (Wagen, Behälter, Karton, etc.).

Eine Auftragsabwicklung erfolgt üblicherweise computergestützt mittels eines Auftragsabwicklungssystems, welches in eine Kommissionersteuerung integriert ist. Die Kommissioniersteuerung kann ein Warenwirtschaftssystem aufweisen. Außerdem kann die Kommissioniersteuerung ferner eine (Lager-)Platzverwaltung sowie eine Informationsanzeigensteuerung integriert haben. Die Kommissioniersteuerung wird üblicherweise durch eine Datenverarbeitungsanlage realisiert, die vorzugsweise zur verzögerungsfreien Datenübertragung und Datenbearbeitung im Online-Betrieb arbeitet.

Eine Kommissionieranlage, die nach dem Prinzip "Mann-zur-Ware" arbeitet, ist exemplarisch in dem Dokument DE 10 2008 057 630 A1 gezeigt. Eine weitere Kommissionieranlage, die nach diesem Prinzip arbeitet, ist in dem Dokument DE 10 2010 050 461 B3 gezeigt. Eine Kommissionieranlage, die nach dem Prinzip "Ware-zum-Mann" arbeitet, ist in dem Dokument DE 10 2010 010 305 A1 gezeigt.

Eine Kombination aus manueller und automatisierter Zonenkommissionierung ist im Dokument US 2004/0243278 A1 gezeigt.

Die DE 203 21 477 U1 offenbart ein System zur dynamischen Bereitstellung von Lagereinheiten. Eine Lagereinheit besteht aus einem Lagergut, das auf einer Palette bereitgestellt wird. Es geht insbesondere um die hochdynamische Bereitstellung der Lagereinheiten. Die Einlagerung der Lagereinheiten erfolgt chaotisch.

Die DE 20 2009 009 774 U1 offenbart ein Lagersystem zum Lagern und Kommissionieren von Artikeln in Form von Einzelartikeln und/oder Packungseinheiten in einem Lagersystem. Das Lagersystem weist ein Hochregallager als Langzeitpuffer auf. Das Lagersystem weist ferner ein Fachbodenregallager als Kommissionierpuffer auf. Die Artikel werden im Kommissionierpuffer ladungsträgerlos gehandhabt.

Ferner sind sogenannte "Kommissionierzüge" bekannt, die insbesondere in der Automobilindustrie bei der Fließbandmontage eingesetzt werden. Mehrere Rollwagen können an einen Transportwagen in Form eines Zugs gehängt werden, um zu den Wagen zugeordneten Montageorten verbracht zu werden. An jedem Montageort werden spezielle Teile benötigt, die dort verbaut werden. Die Transportwagen werden also zuvor entsprechend mit den benötigten Teilen bestückt, d.h. die Teile werden in die Wagen kommissioniert, und dann an die entsprechenden Montageorte gebracht. Wenn ein Wagen leer ist, kann er abgeholt und erneut bestückt werden.

Beim herkömmlichen Kommissionieren aus Lagerbehältern in Auftragsbehälter werden verschiedenen Artikeltypen eines Artikelsortiments nach einem ganz bestimmten Mustern zur Kommissionierung innerhalb eines Lagers bereitgestellt, d.h. angeordnet. Artikeltypen, die häufig in Aufträgen vorkommen, die also eine hohe Gängigkeit bzw. Zugriffshäufigkeit haben, werden oft so angeordnet, dass die (Kommissionier-)Wege zu diesen Artikeltypen kurz sind, wohingegen Artikeltypen, die weniger oft benötigt werden, weiter entfernt angeordnet werden können. Erschwerend kommt hinzu, dass Artikel mit unterschiedlichen Gängigkeiten häufig nach unterschiedlichen Verfahren kommissioniert werden. Beispiele dafür sind: manuelle Zonenkommissionierung mittels "Pick-by-Light"; eine automatische Kommissionierung aus Durchlaufregal, die im Wesentlichen mit A-Artikeln gefüllt sind; Ware-zum-Mann-Kommissionierung für B- und C-Artikel; Mann-zur-Ware-Kommissionierung mit Fachboden- oder Verschieberegalen. Das Lager wird also häufig in logische und räumliche Kommissionierzonen auf Basis der Gängigkeit der Artikel angeordnet.

Die räumliche Anordnung der Artikel erfolgt also in Abhängigkeit von deren Zugriffshäufigkeiten. Die Zugriffshäufigkeit selbst wird üblicherweise kategorisiert. Unter der "Zugriffshäufigkeit" versteht man allgemein eine Zahl von Anforderungen eines Artikels pro Zeiteinheit. Eine Kategorisierung bzw. Klassifizierung kann alternativ auch in Abhängigkeit von Absatzmengen, Umschlagshäufigkeiten oder anderen Kriterien erfolgen. Man spricht in diesem Zusammenhang auch von einer ABC-Verteilung. Eine Sortierung eines Artikelsortiments nach Zugriffshäufigkeiten kann durch eine sogenannte Lorenz-Kurve ausgedrückt werden. Analog wird auch der Begriff "Pareto"-Verteilung benutzt.

Wenn ein Artikeltyp nicht mehr im Kommissionierlager vorhanden ist, weil alle Artikel dieses Typs kommissioniert wurden, wird dieser Artikeltyp üblicherweise nachgefüllt bzw. nachbestückt. Die Nachbestückung erfolgt aus einem Langzeitlager heraus, das üblicherweise örtlich getrennt vom Kommissionierlager vorgesehen ist, wobei das Kommissionierlager in diesem Sinne ein Kurzzeitlager bzw. ein Pufferlager dargestellt.

Des Weiteren ist es möglich, dass innerhalb ein und desselben Kommissionierlagers sowohl manuell als auch automatisiert kommissioniert wird. So können Artikel, die eine hohe Zugriffshäufigkeit haben, zum Beispiel direkt von Paletten-Bereitstellungsplätzen manuell kommissioniert werden, wohingegen andere Artikel, die eine geringere Zugriffshäufigkeit aufweisen, z.B. automatisiert mittels eines Kommissionierautomaten kommissioniert werden.

Es ist üblich, dass eine räumliche Anordnung und Verteilung der Artikel eines Artikelsortiments schon während einer Planungsphase des Kommissionierlagers berücksichtigt und später entsprechend umgesetzt wird. Daher ist es äußerst schwierig, darauf zu reagieren, wenn sich die Zugriffshäufigkeiten der Artikel eines Sortiments häufig und/oder kurzfristig während des Systembetriebs ändern, wie es insbesondere im Bereich des E-Commerce der Fall ist.

E-Commerce-Händler haben oft sehr große Artikelsortimente (30.000 bis 500.000 verschiedene Artikeltypen sind nicht selten). Eine Wahrscheinlichkeit, dass sich eine Zugriffshäufigkeit eines Artikeltyps ändert, ist hoch, weil sich im E-Commerce die Zugriffshäufigkeiten der Artikel durch Kundenverhalten (Hypes) oder gesteuert durch Werbung oder Sonderpreisaktionen ändern. Ein weiterer Aspekt sind die (teilweise bewusst werblich genutzten) Kaufanlässe wie z.B. Weihnachten, Ostern, Muttertag, Vatertag, Valentinstag, Ferienbeginn, Schuljahresbeginn oder Ähnliches. Während einer Angebotsphase ist die Zugriffshäufigkeit auf einen Artikeltyp, der gerade angeboten wird, in der Regel höher als während einer Phase, in der der gleiche Artikeltyp nicht im Sonderangebot ist. Konventionelle Lager- und Kommissioniersysteme sind nicht in der Lage, ausreichend flexibel und kurzfristig auf Zugriffshäufigkeitsschwankungen innerhalb der Artikel eines Sortiments zu reagieren.

Insbesondere bei E-Commerce-Anwendungen ergeben sich die nachfolgend aufgeführten Schwierigkeiten:
- Ein Versand muss am gleichen Tag erfolgen, wie eine Bestellung eingeht, wobei ein Zeitpunkt, zu dem eine Bestellung zuletzt möglich ist, sehr knapp vor der eigentlichen Auslieferung liegen kann.
- Eine ABC-Struktur der Artikel ändert sich oft und häufig.
- Generell liegen sehr breite Artikelsortimente vor (z.B. von kleinteiligen Modeaccessoires bis hin zu großen Möbelstücken oder schweren Maschinen wie Waschmaschinen).
- Es gibt extreme Spitzenbelastungen (z.B. während der Vorweihnachtszeit, vor Ostern oder dgl.).
- Viele Lieferungen werden retourniert (z.B. weil eine Schuhgröße nicht passt). Diese Retourwaren müssen wieder in das System eingegliedert werden, um später erneut in einer anderen Bestellung ausgeliefert werden zu können.
- Wünsche der Kunden sind schwer vorhersagbar.
- Ein schneller Return-of-Invest (ROI) ist gewünscht.

Es ist daher eine Aufgabe der vorliegenden Erfindung, ein Lager- und Kommissioniersystem sowie ein Verfahren zum Umorganisieren eines Artikelsortiments bereitzustellen, das die oben erwähnten Nachteile überwindet.

Diese Aufgabe wird gelöst durch das Kennzeichen des Anspruchs 1.

Dieses System ermöglicht es, schnell und einfach auf einen Wechsel der Gängigkeit bzw. Zugriffshäufigkeitskategorie eines Artikels zu reagieren. Die Artikel, insbesondere solche, deren Zugriffshäufigkeit sich ändert, können schnell und effektiv neu innerhalb des Systems angeordnet werden. Das System ist in der Lage sich automatisch neu zu organisieren. Alle gängigen Kommissionierverfahren (Ware-zum-Mann, Mann-zur-Ware, manuelle Kommissionierung, automatisierte Kommissionierung, etc.) können problemlos kombiniert werden, insbesondere wenn eine ABC-Verteilung der Artikel vorliegt.

In den Kommissionierzonen, die den hier beschriebenen Bereitstellungszonen entsprechen, werden die zu kommissionierenden Artikel in vorzugsweise modular aufgebauten Regalen bereitgestellt. Die Regale sind insbesondere als kleinere Einheiten genormt ausgebildet. Viele (kleinere) Lagereinrichtungen können so zu einer größeren Funktionseinheit (z.B. Regalblock) kombiniert werden. Wenn eine der (kleineren) Lagereinrichtungen leerkommissioniert wurde, wird diese durch die Transporteinrichtungen ausgetauscht. Die Transporteinrichtungen holen die entsprechende Lagereinrichtung ab und verbringen sie in eine Bestückungszone, die sich von der Kommissionierzone unterscheidet. Während einer Neubestückung oder einer erneuten Bestückung können Zugriffshäufigkeitskategoriewechsel berücksichtigt werden. Es ist ohne Probleme möglich, dass ein betroffener Artikeltyp seinen Bereitstellungsort, wo er kommissioniert wird, ändert, indem dieser Artikeltyp einfach in eine andere Lagereinrichtung bestückt wird, die in der Bereitstellungszone angeordnet ist, die der neuen Kategorie entspricht.

Das System der Erfindung kann äußerst flexibel auf Änderungen der Artikelkategorien reagieren. Das zu kommissionierende Artikelsortiment kann jederzeit kurzfristig in den Kommissionierzonen umorganisiert werden, d.h. insbesondere neu angeordnet werden.

Wie oben bereits erwähnt, weisen die Lagereinrichtungen vorzugsweise ein Basisgestell mit genormten Abmessungen auf.

Wenn alle Lagereinrichtungen hinsichtlich ihres Basisgestells gleich ausgebildet sind, wird lediglich ein einziger Lastaufnahmemitteltyp für die Transportein3richtungen benötigt. Dies bedeutet, dass jede Transporteinrichtung jede der Lagereinrichtungen zwischen den Zonen hin- und her bewegen kann. Dies macht eine Routenplanung für die Transporteinrichtungen einfacher. Das System kann flexibler auf Anforderungen reagieren, weil jede der Transporteinrichtungen in der Lage ist, eine aktuell zu transferierende Lagereinrichtung umzusetzen.

Bei einer besonderen Ausgestaltung weist die Bestückungszone mindestens einen manuellen oder automatisierten Arbeitsplatz zum Bestücken der Lagereinrichtungen auf.

Durch die Entkopplung der Bereitstellungszone von den Bestückungszonen ist es möglich, die Lagereinrichtungen zu bestücken, bevor eine der Lagereinrichtungen in den Bereitstellungszonen (vollständig) geleert ist. Diese "Nachfüllung" der Lagereinrichtung erfolgt, wo es möglich ist, vorzugsweise automatisiert. Regale mit Durchlaufkanälen lassen sich hervorragend automatisiert bestücken. Es kommt somit im Bereich der Bereitstellungszonen nahezu niemals vor, dass ein Artikel nicht zur Kommissionierung zur Verfügung steht. Der Austausch einer Lagereinrichtung (leer gegen voll) kann durch die Steuerung des Systems bereits angestoßen werden, wenn ein einziger Speicherort der Lagereinrichtung geleert ist, obwohl die anderen Speicherorte der Lagereinrichtung, sofern die Lagereinrichtung mehrere Speicherorte aufweist, immer noch ausreichend gefüllt sind. Diese Flexibilität ist besonders bei Artikeltypen von Vorteil, denen eine niedrige Zugriffshäufigkeitskategorie zugeordnet ist.

Ein genereller Vorteil der Erfindung ist darin zu sehen, dass die Artikel hinsichtlich ihrer Kategorie vorzugsweise zonenrein bereitgestellt werden. Dies bedeutet, dass die Zonen, soweit möglich, immer nur Artikel einer einzigen Kategorie aufweisen. Dieser Vorteil wird durch die schnelle und einfache Anpassung des Kommissionierpuffers an eine ABC-Struktur ermöglicht.

Weiter ist es von Vorteil, wenn mehrere Arbeitsplätze vorgesehen sind, von denen wenigstens einer nur zum Beladen und ein anderer nur zum Entladen der Lagereinrichtungen eingerichtet sind.

Wenn mehrere Arbeitsplätze vorgesehen sind, können verschiedene Lagereinrichtungen parallel bearbeitet werden. Wenn zusätzlich zwischen Arbeitsplätzen für die Beladung bzw. Bestückung und Arbeitsplätzen für die Entleerung unterschieden wird, kann der Prozess des Bestückens und der Prozess des Entleerens entkuppelt werden. Dies steigert die Effizienz des Gesamtsystems. Die Entkopplung der Berückung und der Entleerung hat sich als besonders vorteilhaft herausgestellt, wenn die Lagereinrichtungen vollständig neu bestückt werden, d.h. wenn den Lagereinrichtungen ganz andere Artikeltypen als zuvor zugeordnet werden.

Bei einer weiteren besonderen Ausgestaltung weist das System ferner eine Fördertechnik auf, die eingerichtet ist, Ladehilfsmittel und/oder die Lagereinrichtungen durch das System, insbesondere zwischen den Bereitstellungszonen und der Bestückungszone, zu transportieren.

Die Fördertechnik unterstützt den Materialfluss innerhalb des Systems. Über die Fördertechnik können sowohl die zu kommissionierenden Artikel als auch die Lagereinrichtungen transportiert werden, in denen die Artikel zur Kommissionierung bereitgestellt werden. Die eingangs erwähnten Transporteinrichtungen können durch eine Fördertechnik implementiert sein. In diesem Fall ist vorzugsweise jeder der Bereitstellungsorte sowie die Bestückungszone an die Fördertechnik gekoppelt, um die Lagereinrichtungen zwischen den verschiedenen Zonen transferieren zu können.

Vorzugsweise gibt der Statuscode zusätzlich eine aktuelle Position der entsprechenden Lagereinrichtungen innerhalb des Systems an.

Der Statuscode kann dann zur Navigation der Lagereinrichtung innerhalb des Systems benutzt werden. Hier ist es besonders bevorzugt, wenn jede der Lagereinrichtungen mit einer vorzugsweise drahtlosen Kommunikationseinheit versehen ist, um der Steuerung permanent oder periodisch mitzuteilen, wo sich die entsprechende Lagereinrichtung momentan innerhalb des Systems befindet. Basierend auf der aktuellen Position kann die Steuerung dann auch gegebenenfalls eine Transportroute ändern, zum Beispiel weil sich auf der geplanten Route ein Hindernis ergeben hat.

Bei einer bevorzugten Ausführungsform weist das System ferner mindestens ein Langzeitlager auf, das vorzugsweise mit einer integrierten Vereinzelungsstation vorgesehen ist. Das Langzeitlager fungiert als Nachschub für die Bestückungszone, die wiederum die Kommissionier- bzw. Bereitstellungszonen mit Artikeln versorgt. Selbstverständlich kann man auf das Langzeitlager verzichten, wenn sichergestellt ist, dass benötigte Artikel zeitnah über den Wareneingang bereitgestellt werden. Dies ist aber üblicherweise nicht der Fall.

Die Artikel werden im Langzeitlager oftmals in größeren Gebinden bereitgestellt, so dass eine Vereinzelung in kleinere Gebinde vorteilhaft ist. Dazu dient die optionale Vereinzelungsstation. Die Vereinzelungsstation selbst kann dabei als Bestückungszone fungieren, wenn die vereinzelten Artikel in einer der Bereitstellungszonen direkt benutzt werden können.

Das Langzeitlager selbst kann als Bestückungszone fungieren, wenn ausgelagerte Lagereinheiten (z.B. Europalette) direkt in einer der Bereitstellungszonen (A⁺-Zone) einsetzbar sind.

Weiter ist es von Vorteil, wenn die Steuerung ferner eingerichtet ist, Fahraufträge für die Transporteinrichtungen in Abhängigkeit von einem Standort, einem Zielort, einer Route und/oder einem Bereitstellungszeitpunkt zu erzeugen.

Die Steuerung kann dafür sorgen, dass auszutauschende Lagereinrichtungen sofort ausgetauscht werden. Eine leere Lagereinrichtung wird nahezu ohne zeitliche Unterbrechung sofort durch eine bereits entsprechend gefüllte Lagereinrichtung in der Bereitstellungszone ausgetauscht. Die Steuerung sorgt durch entsprechende Fahraufträge dafür, dass die neue Lagereinrichtung zuvor in der Bestückungszone entsprechend bestückt und anschließend sofort in die Nähe ihres Bestimmungsorts verbracht wird. Mit einem anderen Fahrauftrag kann die Steuerung dafür sorgen, dass die sich in naher Zukunft leerende Lagereinrichtung abgeholt wird, sobald sie leer ist. Der entsprechende Bereitstellungsplatz, wo die auszutauschenden Lagereinrichtungen zu positionieren sind, ist also nur sehr kurzzeitig unbesetzt.

Die Steuerung ist insbesondere eingerichtet, eine Anordnung des Artikelsortiments in Bezug auf Kommissionierwege und/oder Kommissionierzeiten zu optimieren.

Die Steuerung sorgt dafür, dass die Artikel in den Bereitstellungszonen optimiert aufgestellt sind. Artikel, die besonders häufig benötigt werden, stehen zum Beispiel weiter vorne in einer Regalgasse als solche Artikel, die weniger häufig oft benötigt werden. Die ABC-Verteilung spiegelt sich also nicht nur in den Bereitstellungszonen als solchen wieder, sondern auch innerhalb der Bereitstellungszonen durch eine entsprechende Anordnung der Artikel.

Ferner wird die oben genannte Aufgabe gelöst durch das Kennzeichen des Anspruchs 10.

Dabei ist es besonders bevorzugt, wenn anhand des Statuscodes für jede der Lagereinrichtungen festgestellt wird, ob die entsprechende Lagereinrichtung erneut zu bestücken ist, und wenn sie erneut zu bestücken ist, eine andere Lagereinrichtung gemäß einer identischen Bestückungsliste in der Bestückungszone bestückt wird, bevor die erneut zu bestückende Lagereinrichtung tatsächlich ausgetauscht werden muss.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Blockdiagramm eines Lager- und Kommissioniersystem der Erfindung;
- Fig. 2: ein Blockdiagramm einer Kommissioniersteuerung;
- Fig. 3: ein Blockdiagramm eines Kunden- bzw. Kommissionierauftrags;
- Fig. 4: eine Lagerplatzliste;
- Fig. 5: einen Datensatz, der datentechnisch einer Lagereinrichtung zugeordnet ist;
- Fig. 6: eine vergrößerte Darstellung eines Teils eines Systems gemäß der Erfindung, insbesondere Kommissionier- bzw. Bereitstellungszonen, eine Bestückungszone und Transporteinrichtungen;
- Fig. 7: eine perspektivische Darstellung eines Teils der Fig. 6;
- Fig. 8: ein erstes Flussdiagramm; und
- Fig. 9: ein zweites Flussdiagramm.

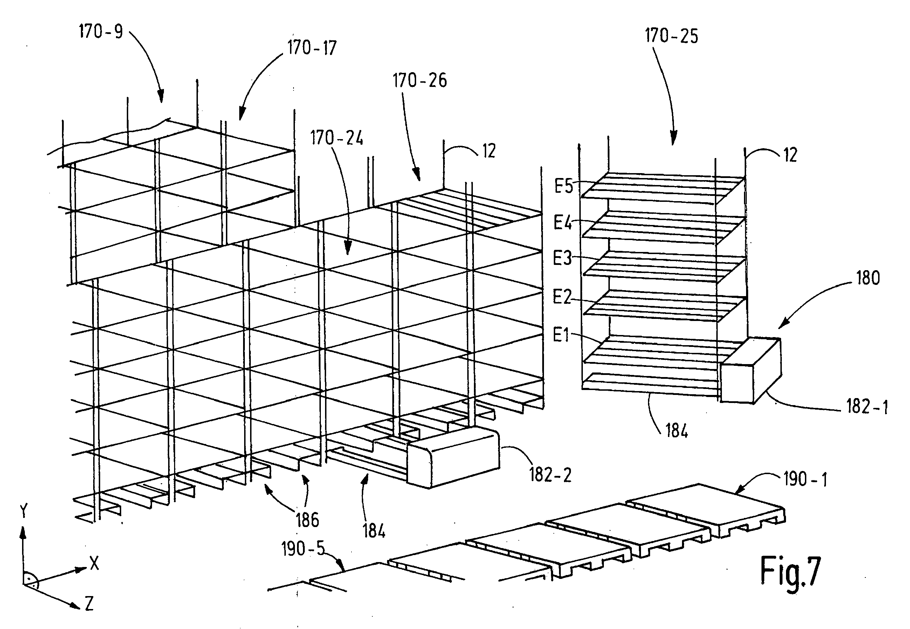

Wenn im Nachfolgenden von vertikalen und/oder horizontalen Orientierungen gesprochen wird, versteht es sich von selbst, dass diese Orientierungen jederzeit durch eine entsprechende Drehung miteinander vertauscht werden können und deshalb nicht einschränkend zu verstehen sind. Wie in der (Intra-)Logistik üblich, werden in einem Lager eine Längsrichtung mit "X", eine Querrichtung mit "Z" und eine Höhenrichtung mit "Y" bezeichnet. Die Richtungen XYZ definieren vorzugsweise ein kartesisches Koordinatensystem, wie es exemplarisch in Fig. 7 gezeigt ist.

Unter einem Artikel wird nachfolgend eine Lager- und/oder Kommissioniereinheit innerhalb eines Lager- und Kommissioniersystems verstanden. Die Lagereinheit kann ein Lagerladehilfsmittel sowie das Lagergut selbst umfassen. Die Lagereinheit kann aber auch nur der Artikel selbst sein, wenn man das Lagerladehilfsmittel weglässt. Als Lagerladehilfsmittel werden üblicherweise Ladehilfsmittel eingesetzt, wie zum Beispiel Paletten, Gitterboxen, Container, Behälter, Kartons, Tablare, etc.

Eine Lageranordnung (z.B. ein Regallager) umfasst üblicherweise eine Vielzahl von Regalen, die meist parallel in Form von Einzelregalen oder Doppelregalen angeordnet sind. Doppelregale sind Einzelregale, die Rücken an Rücken aufgestellt sind. Zwischen den Regalen sind Regalgassen definiert, die üblicherweise in der Längsrichtung X der Regale entlang deren Längsseiten verlaufen und als Aktionsraum für die Kommissionierung dienen. Die Regale enden an ihren, sich jeweils gegenüberliegenden (kurzen) Stirnseiten, die wiederum in einer Ebene senkrecht zur Längsrichtung der Regalgasse orientiert sind. Die Regale selbst weisen eine Vielzahl von (Regal-)Lagerplätzen bzw. Stellplätzen auf, die in übereinanderliegenden Regalebenen angeordnet sind. Eine Regalzeile erstreckt sich in einer horizontalen Richtung innerhalb eines Lagers und weist üblicherweise viele Lager- bzw. Stellplätze übereinander und nebeneinander auf.

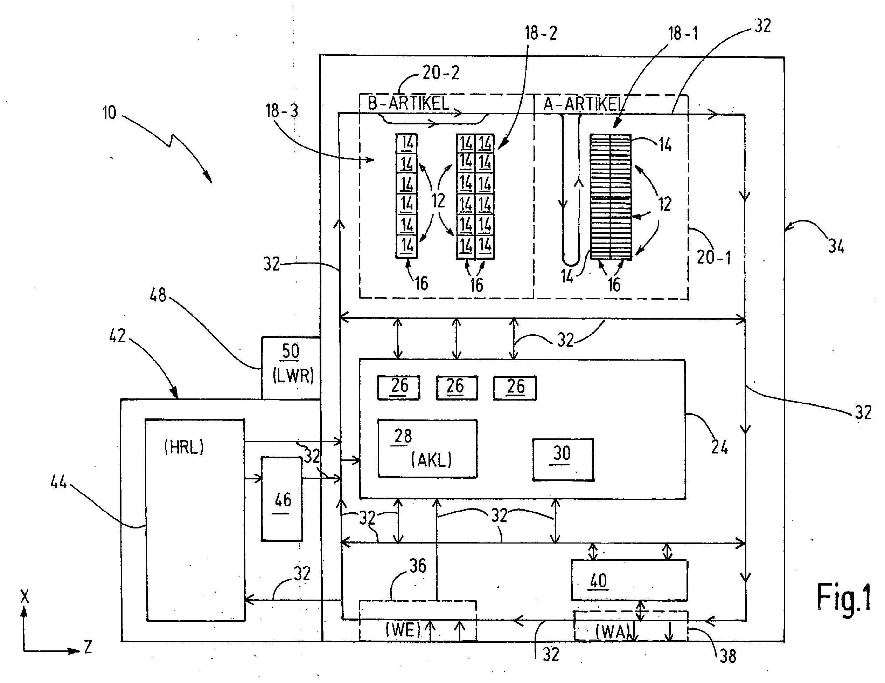

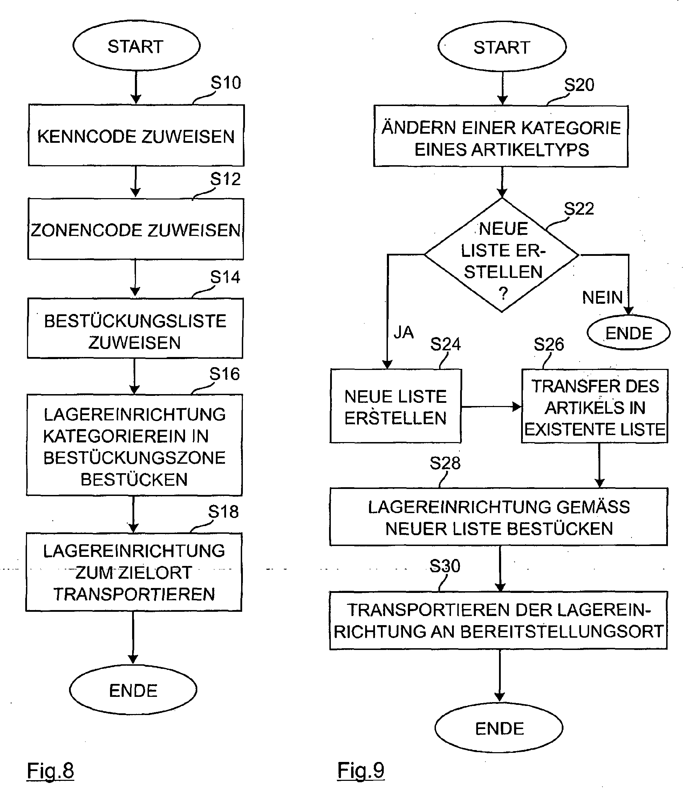

Die nachfolgend detailliert beschriebene Erfindung betrifft allgemein ein Lager- und Kommissioniersystem 10 (Fig. 1) sowie ein Verfahren (Fig. 8 und 9).

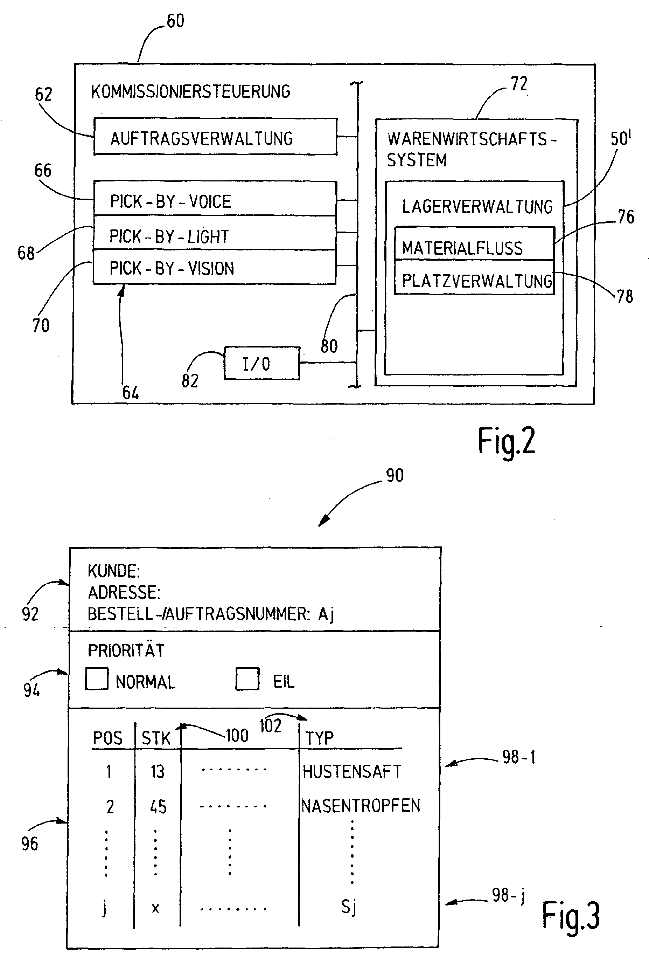

Das erfindungsgemäße System 10 kann verschiedene Lagerbereiche, Aktionsbereiche und Arbeitsplätze oder -stationen aufweisen. Die "Aktionsbereiche" sind in "Zonen" angeordnet, wo z.B. eine Kommissionierung stattfinden kann. Eine Zone ist ein Bereich (Raum oder Fläche) innerhalb des Systems 10 mit üblicherweise fest definierten Grenzen. Wenn im Nachfolgenden von einem "Arbeitsplatz" gesprochen wird, so ist damit eine Ansammlung von Komponenten gemeint, wie sie in der Lager-, Kommissionier- und/oder Fördertechnik eingesetzt werden. An einem Arbeitsplatz werden die oben genannten Komponenten zum Zwecke der Abarbeitung eines Kommissionierauftrags oder zur Bereitstellung von Artikeln eingesetzt und angeordnet. Eine Struktur bzw. ein Aufbau eines Kommissionierauftrags wird unter Bezugnahme auf Fig. 3 noch näher beschrieben werden.

Eine Kommissionierung erfolgt z.B. aus einem Lagerbehälter automatisiert und/oder manuell in einen Auftragsbehälter. Andere oder keine Lager-/Auftragsladehilfsmittel können eingesetzt werden. Nachfolgend werden exemplarisch ausschließlich Lager- und Auftragsbehälter betrachtet werden. Die Lager- und Auftragsbehälter können über eine Fördertechnik 32 (z.B. Rollenförderer, Gurtförderer, Kettenförderer, Hängeförderer, etc.) zwischen den verschiedenen Arbeitsplätzen, Bereichen und Zonen des Systems 10 transportiert werden.

Die Begriffe "Regalplatz", "Lagerplatz", "Palettenplatz" und "Speicherplatz" werden hinsichtlich einer Bevorratung von Artikeln äquivalent benutzt werden. Mit diesen "Plätzen" sind Orte mit oder ohne Ladehilfsmittel innerhalb des Systems gemeint, wo die Artikel zum Zwecke der Kommissionierung entnehmen oder wo die Artikel gepuffert werden können. Ein "Speicherplatz" ist ein Ort, wo die Artikel innerhalb einer Lagereinrichtung zum Zwecke einer Kommissionierung bereit gehalten werden. Gleiches kann für einen "Palettenplatz" gelten. Generell macht es keinen Unterschied, ob eine Kommissionierung (insbesondere eine Artikelentnahme oder -abgabe) zum Beispiel aus einem Fachbodenregal, aus einem Regal mit Durchlaufkanälen oder an einem Palettenstellplatz erfolgt. Die vorliegende Erfindung eignet sich jedoch besonders gut zum Einsatz in einem Regallager. Es macht dabei keinen Unterschied, ob Einzel- oder Doppelregale eingesetzt werden, ob in einer Regalgasse oder nur entlang einer bestimmten Seite, vorzugsweise einer Längsseite der Regale, kommissioniert wird oder ob zum Beispiel aus mehreren Ebenen/Etagen eines Regals kommissioniert wird. Üblicherweise werden die zu kommissionierenden Artikel aus den Lagerladehilfsmitteln entnommen oder abgegeben, die entlang der Längsseite der Regale - relativ zueinander - übereinander und/oder untereinander angeordnet sein können.

Fig. 1 zeigt ein Blockdiagramm eines Lager- und Kommissioniersystems 10 gemäß der Erfindung, das nachfolgend auch kurz als das "System 10" bezeichnet werden wird. Dieses System 10 zeichnet sich dadurch aus, dass die Artikel in Abhängigkeit von in ihren Zugriffshäufigkeitskategorien zum Zwecke der Kommissionierung in Zonen 20 bereitgestellt werden. Wechselt ein Artikel seine Kategorie, kann er schnell und einfach in eine neue Zone umgesiedelt werden, weil die Artikel in, vorzugsweise kleineren, modular aufgebauten, Lagereinrichtungen 12 bereitgestellt werden, die transportabel ausgebildet sind, um sie in nach einem Kategoriewechsel in einer anderen Zone 20 anzuordnen.

Das System 10 weist also eine Vielzahl von Lagereinrichtungen 12, wie zum Beispiel Regale 14 auf. Die Lagereinrichtungen 12, und insbesondere die Regale 14, weisen vorzugsweise eine einheitliche Grundfläche oder ein einheitliches Basisgestell auf, so dass innerhalb des Systems 10 Bediengeräte zum Transferieren der Lagereinrichtungen 12 eingesetzt werden können, die lediglich einen einzigen Lastaufnahmemittel-Typ aufweisen. Ein weiterer Vorteil der einheitlichen Grundfläche ist darin zu sehen, dass die Lagereinrichtungen 12 entlang eines gleichmäßigen Rasters positionierbar sind, was wiederum die Planung und Adressierung der Lagereinrichtungen erleichtern kann, wie es nachfolgend noch näher ausgeführt werden wird.

Die Regale 14 werden vorzugsweise in Form von Regalzeilen 16 angeordnet. In der Fig. 1 sind exemplarisch fünf Regalzeilen 16 gezeigt. Die Lagereinrichtungen 12 können Blöcke 18 bilden. In der Fig. 3 sind drei Blöcke 18-1 bis 18-3 gezeigt. Die Blöcke 18-1 und 18-2 weisen in der Fig. 1 jeweils zwei Regalzeilen 16 auf, die Rücken an Rücken aufgestellt sind. Der Block 18-3 kann aus einer einzigen Regalzeile 16 gebildet werden.

Die Lagereinrichtungen 12, die zum Beispiel auch in Form von Paletten, Kommissionierautomaten oder ähnlichen Einrichtungen implementiert sein können, werden zum Zwecke einer Kommissionierung, und insbesondere zum Zwecke einer Artikelentnahme bzw. -abgabe, in sogenannten Bereitstellungszonen 20 angeordnet. In der Fig. 1 sind exemplarisch zwei Zonen 20-1 und 20-2 gezeigt. Es können mehr als zwei Zonen 20 vorgesehen werden. Jede der Bereitstellungszonen 20 definiert einen räumlichen Bereich innerhalb des Systems 10, wo solche Lagereinrichtungen 12 bereitgestellt werden, denen jeweils eine gleiche Zugriffshäufigkeits-Kategorie zugeordnet ist, wie es unten noch näher erläutert werden wird. In der Fig. 1 werden in der ersten Bereitstellungszone 20-1 z.B. ausschließlich Artikel der Kategorie "A" bereitgestellt. In der zweiten Bereitstellungszone 20-2 werden zum Beispiel ausschließlich Artikel der Kategorie "B" bereitgestellt. Es versteht sich, dass die Zonen 20 im Wesentlichen die Artikel einer einzigen Kategorie aufweisen. Es kann jedoch vorkommen, dass eine der Zonen (kurzzeitig) auch einige Artikel einer anderen Kategorie aufweist, bis dieser Artikeltyp vollständig verbraucht, d.h. kommissioniert, wurde.

Die sogenannten "A-Artikel" der ersten Bereitstellungszone 20-1 weisen z.B. eine höhere Zugriffshäüfigkeit als die sogenannten "B-Artikel" der zweiten Bereitstellungszone 20-2 auf. In der Fig. 1 grenzen die Bereitstellungszonen 20-1 und 20-2 direkt aneinander. Es versteht sich, dass die verschiedenen Bereitstellungszonen 20 auch entfernt voneinander oder überlappend angeordnet sein können. Räumliche-Grenzen der Bereitstellungszonen 20 sind in der Fig. 1 durch eine Strichlinie angedeutet. Ferner versteht es sich, dass die in der Fig. 1 gezeigten Bereitstellungszonen 20 auch Lagereinrichtungen 12 unterschiedlicher Kategorien aufweisen können. In diesem Fall wäre die Zugriffshäufigkeits-Kategorie dann eher an einen jeweiligen Bereitstellungsort gebunden. Zum Zwecke eines besseren Verständnisses werden nachfolgend ausschließlich "kategoriereine" Bereitstellungszonen 20 beschrieben.

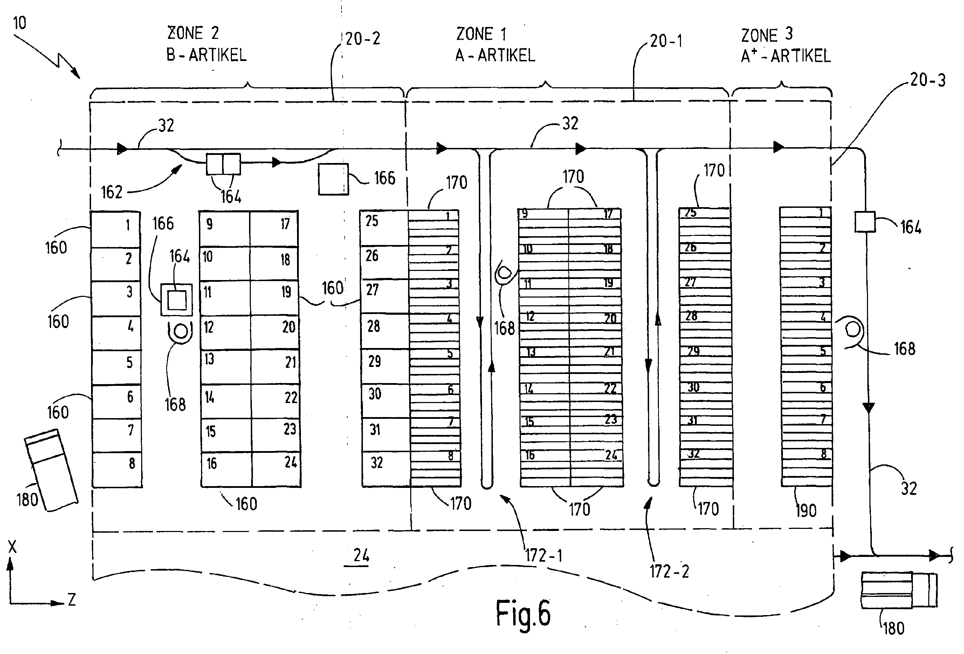

Die Lagereinrichtungen 12 dienen als Kommissioniervorrat für die Artikel, die gemäß Kommissionieraufträgen zu entnehmen sind. Wenn eine der Lagereinrichtungen 12 in den Bereitstellungszonen 20 nicht mehr mit einer ausreichenden Anzahl von Artikeln bestückt ist, kann diese Lagereinrichtung 12 aus der entsprechenden Bereitstellungszone 20 in eine Bestückungszone 24 transportiert werden. Die Lagereinrichtungen 12 sind also transportabel. In der Bereitstellungszone 24 ist mindestens ein Bestückungsarbeitsplatz 26 angeordnet, wo leere oder teilweise gefüllte Lagereinrichtungen 12 erstmals oder erneut mit den Artikeln bestückt werden, um nach einer erfolgreichen Bestückung erstmals oder erneut in eine der Bereitstellungszonen 20 an einen vorherbestimmten Bereitstellungort transportiert zu werden. Der Transport erfolgt üblicherweise durch hier nicht näher dargestellte Transporteinheiten 180 (Fig. 6 und 7) bzw. Transportfahrzeuge, wie zum Beispiel Shuttle 182 mit entsprechend eingerichteten Lastaufnahmemitteln 184.

Die Bestückungszone 24 der Fig. 1 definiert einen Bereich oder eine Fläche innerhalb des Systems 10, wo die Lagereinrichtungen 12 zum Zwecke der Kommissionierung mit den Artikeln bestückt werden. In der Fig. 1 sind exemplarisch drei Bestückungsarbeitsplätze 26 gezeigt, die entweder manuell und/oder automatisiert betrieben werden können. Es versteht sich, dass auch weitere Arbeitsplätze vorgesehen werden können, an denen die Lagereinrichtungen 12, vorzugsweise vollständig, geleert werden, wenn sie aus einer der Bereitstellungszonen 20 zurückkehren, um sie dann anschließend erneut zu bestücken. Derartige Arbeitsplätze sind in der Fig. 1 nicht näher gezeigt. Es versteht sich, dass die Entleerung ebenfalls manuell und/oder automatisiert erfolgen kann.

Die Bestückungszone 24 kann ferner ein oder mehrere Läger, wie zum Beispiel ein automatisiertes Kleinteilelager (AKL) 28 aufweisen. Beim AKL 28 handelt es sich um ein (Langzeit-)Behälterlager, wo z.B. (nicht näher gezeigte) Lagerbehälter mit Artikeln der Kategorien "C" und/oder "D" gespeichert werden. Die Lagerbehälter können aus dem AKL 28 über hier in der Fig. 1 nicht näher in der Bestückungszone 24 gezeigte Transportmittel (z.B. eine Fördertechnik oder mittels der Transporteinheiten) zu den Bestückungsarbeitsplätzen 26 transportiert werden, um die Lagereinrichtungen 12 zu bestücken. Alternativ können die Artikel aus dem Lager 28 auch zu einem weiteren manuell betriebenen Arbeitsplatz 30 befördert werden, der vorzugsweise nach dem Prinzip "Ware-zum-Mann" arbeitet. Der Arbeitsplatz 30 ist optional.

Es versteht sich, dass das System 10 der Fig. 1 eine Fördertechnik 32 (z.B. stationäre Stetigförderer, flurfreie oder flurgebundene Transportfahrzeuge, Hängeförderer, Shuttle und dergleichen) aufweisen kann, um einen Materialfluss 76 (siehe Fig. 2) innerhalb des Systems 10 zu bewältigen. Dies gilt sowohl für die zu kommissionierenden Artikel als auch für die Lagereinrichtungen 12, aus denen heraus kommissioniert wird. In der Fig. 1 ist exemplarisch eine, vorzugsweise in sich geschlossene, Fördertechnik 32 mit vielen Abzweigungen, Zuführungen, Abführungen, Weichen, Übergabepunkten, Aufgabepunkten und dgl. gezeigt. Eine Förderrichtung ist durch Pfeilspitzen angedeutet. Die verschiedenen Bereiche, Zonen und Funktionsmodule des Systems 10 stehen über die Fördertechnik 32 materialflusstechnisch miteinander in Verbindung. Innerhalb der Bereitstellungszone 24, die von einer durchgezogenen Linie umgeben ist, sind aus Gründen einer einfacheren Darstellung keine Fördertechnikelemente gezeigt, die aber dennoch vorhanden sein können.

Üblicherweise wird das System 10 in einer Halle oder einem Gebäude 34 errichtet. Das System 10 kann ferner einen Wareneingang (WE) 36 und einen Warenausgang (WA 38) aufweisen, die in der Fig. 1 jeweils durch eine Strichlinie angedeutet sind. Ferner kann das System 10 eine oder mehrere Packstationen 40 aufweisen, wo die kommissionierten Artikel zwecks Versand gepackt werden können.

Außerdem ist in der Fig. 1 ein (optionales) Langzeitlager 42 für die Artikel gezeigt, das zum Beispiel ein Hochregallager (HRL) 44 zur Langzeitpufferung von Artikeln auf Paletten sein kann. Diese Paletten können an einem Arbeitsplatz 46 vereinzelt oder depalletiert werden. Die Vereinzelung kann direkt in die Lagereinrichtungen 12 hinein erfolgen, so dass der Station 46 die gleiche Funktion wie der Bestückungszone 24 zukommen kann. Die Artikel können aber auch von der Station 46 in die Bestückungszone 24 verbracht werden, um dort an den Arbeitsplätzen 26 in die Lagereinrichtungen 12 bestückt zu werden.

Ferner weist das System 10 eine Steuerung 48 (Zentralrechner, Host, dezentrales Computersystem oder Ähnliches) auf, die in der Fig. 1 in Form eines separaten Blocks dargestellt ist. Die Steuerung 48 kann zum Beispiel einen Lagerverwaltungsrechner (LWR) 50 umfassen. Andere Steuerungskomponenten, wie zum Beispiel ein Materialflussrechner oder Ähnliches, können ebenfalls von der Steuerung 48 umfasst sein. Es versteht sich, dass die Steuerung 48 verdrahtet oder drahtlos mit den verschiedenen Komponenten des Systems 10 datentechnisch in Verbindung steht. Die Steuerung 48 ist für einen Betrieb des Systems 10 verantwortlich, wie es nachfolgend im Zusammenhang mit verschiedenen Funktionsmodulen näher beschrieben werden wird.

Fig. 2 zeigt ein Blockdiagramm einer exemplarischen Kommissioniersteuerung 60. Die Kommissioniersteuerung 60 kann Teil der Steuerung 48 (Fig. 1) sein. Die Kommissioniersteuerung 60 kann modular aufgebaut sein. Die Kommissioniersteuerung 60 kann aufweisen: eine Auftragsverwaltung 62, Kommissionierleitstrategien 64 (wie z.B. Pick-by-Voice 66, Pick-by-Light 68, Pick-by-Vision 70 oder Ähnliches), ein Warenwirtschaftssystem 72, das wiederum eine Lagerverwaltung 50' (z.B. in Form des zuvorerwähnten Lagerverwaltungsrechners 50) aufweist, die wiederum einen Materialfluss 76 sowie eine (Lager- oder Speicher-)Platzverwaltung 78 regeln kann, und/oder eine Schnittstellenverwaltung 82 aufweist. Die Module 60 bis 82 sind üblicherweise in Form von Software- und/oder Hardware implementiert. Die verschiedenen Module 60 bis 82 können über einen (oder mehrere) Kommunikationsbus(se) 80 miteinander kommunizieren. Die Kommunikationssteuerung 60 kann Teil eines Zentralrechners (nicht dargestellt) sein, der üblicherweise durch die Steuerung 48 implementiert ist. Für den Materialfluss 76 kann ein eigener Materialflussrechner (MFR, nicht dargestellt) vorgesehen sein.

Die Auftragsverwaltung 62 sorgt unter anderem dafür, dass eingehende Kunden- bzw. Kommissionieraufträge gesammelt und analysiert werden, um die Lagereinrichtungen 12 entsprechend zu bestücken und zur Abarbeitung auf die Bereitstellungszonen 20 zu verteilen. Dabei können ferner Faktoren wie Auslastung, Stückgutsortiment, Wegoptimierung und Ähnliches eine Rolle spielen. Den Bereitstellungszonen 20 können komplette Aufträge, aber auch nur Teilaufträge, zur Abarbeitung zugewiesen werden.

In Fig. 3 ist ein exemplarischer Kommissionierauftrag 90 (nachfolgend auch kurz als "Auftrag" bezeichnet) gezeigt, der eine oder mehrere Auftragspositionen aufweist, die auch als Auftragszeilen 98 bezeichnet werden. Eine Auftragszeile 98 gibt eine jeweilige Menge (Stückzahl) 100 eines Artikeltyps 102 an, den ein Kunde bestellt hat.

Unter einem Artikel wird generell ein Stückgut oder eine Bestandseinheit ("stock keeping unit", SKU) verstanden. In Distributionssystemen, wie es beispielsweise durch das in der Fig. 1 gezeigte System 10 realisiert wird, können verschiedene SKUs einen gleichen Artikeltyp an verschiedenen Bereitstellungsorten bezeichnen. Ein Artikel kann auch eine Packeinheit sein, die aus mehreren Artikeln des gleichen Artikeltyps besteht und die als Einheit verpackt ist (z.B. sechs Flaschen, die zu einem Träger miteinander verpackt sind). Ein Artikel ist eine durch den Artikeltyp unterscheidbare (kleinste) Einheit eines Artikelsortiments. Stückgüter sind individualisierte, unterscheidbare Güter, die einzeln gehandhabt werden können und deren Bestand stückweise oder als Gebinde (Case) geführt wird. Das Gebinde ist ein allgemeiner Begriff für eine handhabbare Kommissioniereinheit, die manuell oder mittels technischen Geräts (z.B. Fördertechnik) bewegt werden kann. Das System 10 kann zum "Piece-Picking" und/oder zum "Case-Picking" eingesetzt werden.

Der Auftrag 90 der Fig. 3 liegt üblicherweise als Datensatz für die Steuerung 48 vor. Der Auftrag 90 kann ein Kopffeld 92, ein Prioritätsfeld 94 und/oder ein Artikelfeld 96 aufweisen. Das Kopffeld 92 kann unter anderem Informationen zum Kunden, der eine Bestellung aufgebeben hat, zur (Kunden-)Adresse und/oder eine Kunden-Identifikationsnummer sowie eine Bestell-/Auftragsnummer Aᵢ aufweisen. Das Prioritätsfeld 94 kann Angaben darüber enthalten, ob es sich um einen normalen Auftrag oder um einen Eilauftrag handelt. Ein Eilauftrag ist ein Auftrag mit hoher (Bearbeitungs-)Priorität, der üblicherweise vorrangig vor normalen Aufträgen behandelt wird. Das Artikelfeld 96 weist Auftragszeilen 98-1 bis 98-j (j ist eine beliebige ganze Zahl). Jede Auftragszeile 98 weist zumindest Angaben über eine Stückzahl 100 eines jeweiligen Artikels und über einen zugehörigen Artikeltyp 102 auf. Die an erster Position (Pos.1) stehende erste Auftragszeile 98-1 der Fig. 3 steht für eine Bestellung von 13 Einheiten Hustensaft. Die an der zweiten Position stehende Auftragszeile 98-2 steht für eine Bestellung von 45 Einheiten Nasentropfen. Es versteht sich, dass das aus dem Pharmabereich gewählte vorliegende Beispiel auch auf andere Branchen anwendbar ist, wie zum Beispiel den Lebensmittel-Einzelhandel, den Online-Handel (E-Commerce) oder Ähnliches. Üblicherweise steht jede Zeile 98 für einen anderen Artikeltyp Sᵢ. Der gleiche Artikeltyp Sᵢ kann aber auch mehrfach in einem Auftrag Aᵢ auftauchen.

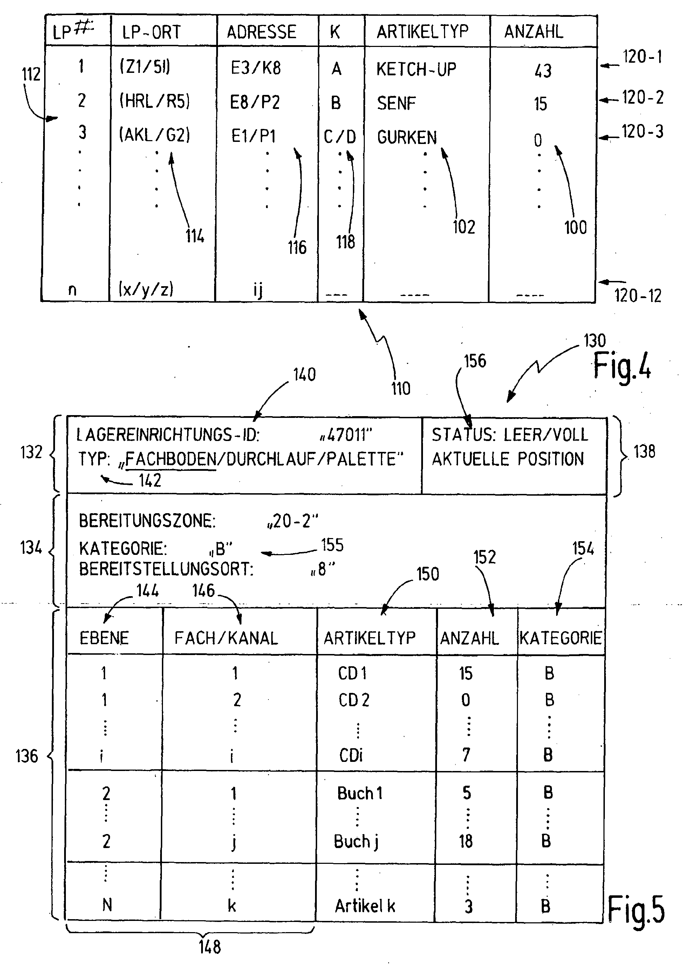

Die oben bereits erwähnte Zugriffshäufigkeit kann z.B. auf Basis einer Analyse einer Vielzahl von Aufträgen 90, die über einen gewissen Zeitraum gesammelt wurden, den Artikeltypen zugeordnet werden. Diese Zuordnung wird unter Bezugnahme auf die Fig. 4 und 5 noch näher beschrieben werden.

In Fig. 4 ist eine (Lager-)Platzliste 110 exemplarisch gezeigt, die üblicherweise als Datensatz für die Platzverwaltung 78 (Fig. 2) dient. Die Liste 110 kann einen Inventur-Datensatz für das gesamte System 10 (Fig. 1) darstellen. Aus der Liste 110 können Lagerorte (Lagerung), Bereitstellungsorte der Lagereinrichtungen 12 innerhalb der Zonen 20 und Speicherplätze (Kommissionierung) ermittelt werden. Die Liste 110 wird nachfolgend spaltenweise von links nach rechts erläutert. Jede Zeile stellt einen eigenen Datensatz dar. Jeder Eintrag kann ein Datenfeld darstellen.

Die erste Spalte repräsentiert fortlaufende Lagerplatznummern 112. Die Lagerplatznummern 112 werden durch eine übergeordnete Ebene der Steuerung 48 verwendet.

Die zweite Spalte repräsentiert Lagerplatzorte 114 im System 10 (z.B. Zone 20 oder Langzeitlager 42 in Fig. 1). Es können z.B. Raumkoordinaten verwendet werden, wobei zum Beispiel das Gebäude 34 als Bezugssystem verwendet wird. Es können aber auch lagerspezifische Koordinaten, wie z.B. "Z1" für die erste Bereitstellungszone 20-1, "HRL" für das Hochregallager 42 oder "AKL" für das automatisierte Kleinteilelager 28, verwendet werden. Einträge in der zweiten Spalte stellen Lagerorte (Langzeitlagerung) und Bereitstellungsorte (Kommissionierung) dar. Ein Bereitstellungsort ist ein Ort, wo eine der Lagereinrichtungen 12 zum Zwecke der Kommissionierung positioniert ist oder wird.

In der dritten Spalte sind Adressen 116 angegeben, die einen konkreten Speicherplatz innerhalb einer der Lagerrichtungen 12 eindeutig identifizieren. Die dritte Spalte repräsentiert also lagereinrichtungsspezifische Koordinaten, ohne jedoch zwischen Langzeitlagerung und Kurzzeitlagerung bzw. einer Bereitstellung zwecks Kommissionierung zu unterscheiden.

Die vierte Spalte repräsentiert die Zugriffshäufigkeits-Kategorie 118.

Die fünfte Spalte gibt den Artikeltyp 102 an und die letzte Spalte repräsentiert wiederum die Stückzahl 100, die bei der jeweiligen Lagerplatznummer 112 vorhanden ist.

Die Liste 110 kann in Form von Zeilen 120 aufgebaut sein. In der Fig. 4 sind die ersten drei Zeilen 120-1 bis 120-3 explizit gezeigt. Die Liste 110 enthält hier exemplarisch n Zeilen. Es versteht sich, dass ein Artikeltyp 102 in mehreren verschiedenen Zeilen 120 der Liste 110 vorkommen kann, zum Beispiel weil er an mehreren Lagerorten 114 simultan bevorratet ist.

Die erste Zeile 120-1 der Liste 110 der Fig. 4 repräsentiert den Lagerplatz mit der Nr. "1 ". Am Lagerplatz Nr. "1" sind 43 Einheiten des Artikeltyps "Ketchup" gelagert. Der Lagerplatz Nr. "1" hat seinen Lagerort 114 in der ersten Bereitstellungszone "Z1" bzw. 20-1 (vgl. Fig. 1) an dem (Bereitstellungs-)Ort mit der Nr. "5". In der ersten Zone 20-1 sind - vorzugsweise ausschließlich - Regale 14 mit Durchlaufkanälen bereitgestellt, um die dort gespeicherten Artikel automatisiert kommissionieren, insbesondere abgeben, zu können. Innerhalb dieses (nicht dargestellten) Regals 14 befindet sich der Artikeltyp "Ketchup" im achten Kanal "K8" der dritten Ebene "E3", wie es durch die Adresse 116 angegeben ist, die hier einem Speicherplatz entspricht. Dem Artikeltyp "Ketchup" wurde die (veränderliche) Zugriffshäufigkeits-Kategorie "A" zugeordnet. Die (Speicherplatz-) Adressen 116 können in Bezug auf das System 10 zwar mehrfach vergeben sein, aber am jeweiligen Lagerplatzort 114 bzw. Bereitstellungsort der jeweiligen Lagereinrichtung 12 immer nur ein Mal. Wenn beispielsweise Regale 14 mit einheitlicher Grundfläche als Lagereinrichtungen 12 verwendet werden, so kann jedes der Regale 14 zum Beispiel fünf Ebenen übereinander mit jeweils acht Regalplätzen (Speicherorten) nebeneinander aufweisen. Jedes der Regale 12 hat dann 40 Speicherplätze bzw. unterschiedliche Adressen 116, die sich aber von Regal 12 zu Regal 12 wiederholen.

Die zweite Zeile 120-2 der Liste 110 der Fig. 4 repräsentiert einen zweiten Lagerplatz mit der Lagerplatznummer "2". Am Lagerplatz Nr. "2" wird "Senf" gelagert, und zwar 15 Einheiten davon. Der Lagerplatz Nr. "2" befindet sich innerhalb des Hochregallagers (HRL) 44 (vgl. Fig. 1) im Regal 5 (R5). Innerhalb des Regals "R5" befindet sich der Lagerplatz Nr. "2" in der achten Ebene "E8" an deren zweiten Regalplatz "P2". "Senf" ist ein Artikel der Kategorie "B" und würde somit, wenn er zur Kommissionierung benötigt wird, in der Zone 20-2 (vgl. Fig. 1) bereitgestellt.

Die dritte Zeile 120-3 der Liste 110 der Fig. 4 repräsentiert den Lagerplatz Nr. "3", wo "Gurken" bevorratet werden. Am Lagerplatz Nr. "3" befinden sich zurzeit aber keine Gurken, so dass die Anzahl 100 Null ist. Die Gurken sind Artikel der Kategorie "C" oder "D", werden also nicht so häufig innerhalb der Kommissionieraufträge 90 benötigt. Deshalb befindet sich der Lagerplatz Nr. "3" zum Beispiel im AKL 28 (vgl. Fig. 1) in der Ebene 1 "E1" an deren ersten Platz "P1".

Es versteht sich, dass die Liste 110 der Fig. 3 um weitere Attribute oder Eigenschaften in Form weiterer Spalten erweitert werden kann. So kann zum Beispiel ferner angegeben werden, in welchem Ladehilfsmitteltyp der entsprechende Artikeltyp bevorratet und/oder bereitgestellt wird. Ferner kann angegeben werden, wie viele Einzelstücke eine Einheit enthält.

In Fig. 5 ist ein Datensatz 130 gezeigt, der jeder der Lagereinrichtungen 12 (vgl. Fig. 1) durch die Steuerung 48 unter Berücksichtigung von Faktoren wie z.B. Materialfluss, Zugriffshäufigkeit, Bestand oder Ähnlichem zugeordnet wird.

Der Datensatz 130 weist einen individualisierenden (Lagereinrichtungs-)Kenncode 132, einen variablen Zonencode 134, eine veränderliche Bestückungsliste 136 sowie einen Statuscode 138 auf.

Der Kenncode 132 weist eine individuelle Identifizierungsnummer 140 (z.B. "47011 ") für jede der Lagereinrichtungen 12 auf. Der Kenncode 132 kann ferner ein weiteres Datenfeld für einen Lagereinrichtungstyp 142 aufweisen. Im Beispiel der Fig. 5 handelt es sich bei der Lagereinrichtung 12 mit der Identifizierungsnummer (ID) "47011" um ein Fachbodenregal. Zu jedem der Lagereinrichtungstypen sind die verfügbaren Speicherorte adressierbar hinterlegt. Andere Lagereinrichtungstypen, wie zum Beispiel Durchlaufregale, Paletten oder Ähnliches können ebenfalls verwendet werden.

Der Zonencode 134 weist Informationen zur Bereitstellungszone auf, wo die entsprechende Lagereinrichtung 12 anzuordnen ist. Im Beispiel der Fig. 5 ist die entsprechende Lagereinrichtung 12 (geografisch) in der Bereitstellungszone "20-2" anzuordnen. Diese ist durch die Zugriffhäufigkeits-Kategorie 154 der zu speichernden Artikel bestimmt, die im vorliegenden Fall der Kategorie "B" entspricht. Der Lagereinrichtung 12 der Fig. 5 ist also eine Kategorie 135 zugeordnet, die nicht zwingend als eigenständiges Datum im Datensatz 130 enthalten sein muss. Innerhalb der Bereitstellungszone 20-2 ist die exemplarisch betrachtete Lagereinrichtung 12 an dem Bereitstellungsort "8" anzuordnen. Die im Zonencode 134 enthaltenen Informationen zur Bereitstellungszone und zum Bereitstellungsort innerhalb dieser Zone entsprechen dem Lagerplatzort 114 der Liste 110 der Fig. 4. Betrachtet man zusätzlich die Speicherorte innerhalb der Lagereinrichtung 12 so entsprechen diese der Adresse 116 der Fig. 4.

Die lagereinrichtungsspezifische Bestückungsliste 136 der betrachteten Lagereinrichtung 12 kann Informationen zur (Bereitstellungs-)Ebene 144, sofern mehrere Ebenen vorhanden sind, zum (Bereitstellungs-)Fach/-Kanal 146, sofern mehrere Fächer oder Kanäle vorhanden sind, zum Artikeltyp 150, zur dort gespeicherten Einheitenanzahl 152 dieses Artikeltyps und/oder zur (Zugriffshäufigkeits-)Kategorie 154 aufweisen. Die Informationen 144 und 146 gemeinsam entsprechen der Adresse 116 in Fig. 4 bzw. dem Speicherplatz innerhalb der entsprechenden Lagereinrichtung 12. Der Artikeltyp 150 entspricht dem Artikeltyp 102. Die Anzahl 152 kann der Anzahl 100 entsprechen. Die Kategorie 154 entspricht der Kategorie 118. Da die Lagereinrichtung "47011" der Fig. 5 in der Bereitstellungszone 20-2 der Kategorie "B" zu positionieren ist, enthält die Bestückungsliste 136 üblicherweise auch nur Artikeltypen 150 der Kategorie 150 "B". Dies kann sich aber im Laufe einer Betriebsphase (nachträglich) ändern.

Der Statuscode 138 des Datensatzes 130 enthält Informationen zum (Bestückungs-)Status 156 der entsprechenden Lagereinrichtung 12. Ferner kann der Statuscode 138 eine Information zur aktuellen Position der entsprechenden Lagereinrichtung 12 innerhalb des Systems 12 aufweisen. Die Position muss nicht zwingend einen Ort innerhalb eines Lagers oder einer Zone darstellen. Die Lagereinrichtungen 12 sind schließlich transportabel, so dass ihre aktuelle Position auch einen Position auf einem Transportweg sein kann. Der Status 156 beschreibt, ob die entsprechende Lagereinrichtung 12 leer, teilbestückt oder vollständig bestückt ist.

Nachdem der grundsätzliche Aufbau des Systems 10 sowie die venwendeten Datenstrukturen erläutert wurden, wird nachfolgend anhand eines konkreten Beispiels beschrieben, wie das System 10 betrieben wird.

Fig. 6 zeigt eine Teilansicht eines Systems 10, das ähnlich wie das System der Fig. 1 aufgebaut ist. In der Fig. 6 sind drei Bereitstellungszonen 20-1 bis 20-3 gezeigt, die seitlich aneinandergrenzen und die jeweils mit einer Strichlinie umrandet dargestellt sind. Die Bereitstellungszonen 20-1 bis 20-3 sind in der Fig. 6 in der Querrichtung Z nebeneinander angeordnet. Eine Bestückungszone 24 ist unterhalb der Bereitstellungszonen 20-1 bis 20-3 angrenzend an diese angeordnet. In der ersten Bereitstellungszone 20-1 sind 32 Regale 170 mit Durchlaufkanälen in Form von drei Blöcken angeordnet. Der erste linke Block wird durch eine Regalzeile bestehend aus acht Regalen 170 gebildet, die in der Längsrichtung X hintereinander und aneinandergrenzend an acht Bereitstellungsorten positioniert sind, die mit den fortlaufenden Nummern "1" bis "8" nummeriert und adressiert sind. Der mittlere Block wird aus zwei Regalzeilen gebildet, die Rücken an Rücken positioniert sind. Die Regale 170 des mittleren Blocks sind an Bereitstellungsorten mit den fortlaufenden Nummern "9" bis "24" positioniert. Der rechte Block wird wiederum durch eine Regalzeile gebildet, die acht Regale 170 aufweist, die an Bereitstellungsorten mit den Nummern "25" bis "32" positioniert sind. Es versteht sich, dass jedes der Regale 170 der ersten Bereitstellungszone 20-1 automatisiert betrieben werden kann, indem zum Beispiel (nicht dargestellte) Auswerfer an den Ausgabeenden der jeweiligen Kanäle der Regale 170 vorgesehen sind und die Kanäle selbst leicht gegenüber der Horizontalen geneigt ausgebildet sind. Auftragsbehälter 164, die über die (Haupt-)Fördertechnik 32 transportiert werden, können über Fördertechnik-Schleifen 172 an den Regalen 170 vorbeigeführt werden, um die zu kommissionierenden Artikel automatisiert aus den Kanälen in die Auftragsbehälter 164 auszuwerfen. In jeder Regalgasse, die zwischen den Regalblöcken definiert sind, ist im Beispiel der Fig. 6 eine Fördertechnik-Schleife 172-1 bzw. 172-2 vorgesehen. Die Kommissionierung in der Bereitstellungszone 20-1 erfolgt also automatisiert, wobei weder nach dem Prinzip "Ware-zum-Mann" noch nach dem Prinzip "Mann-zur-Ware" kommissioniert wird. Dennoch kann sich auch in der ersten Bereitstellungszone 20-1 eine Kommissionierperson 168 bewegen, zum Beispiel um Wartungsarbeiten an den Kanälen der Regale 170 durchzuführen. In der ersten Bereitstellungszone 20-1 sind zum Beispiel (ausschließlich) A-Artikel gespeichert. Sobald eines der Regale 170 hinsichtlich seines Befüllungszustands einen Schwellenwert unterschreitet, ändert sich der Bestückungsstatus 156 (vgl. Fig. 5) entsprechend und signalisiert so der Steuerung 48, dass das entsprechende Regal 170, vorzugsweise sofort, auszutauschen ist. Dieser Schwellenwert kann kanalabhängig oder regalabhängig festgelegt werden. Der Schwellenwert gibt an, dass eine Mindestanzahl an bereitzustellenden Artikeln bald unterschritten wird oder bereits unterschritten ist.

Die Steuerung 48 kann dann den Austausch der entsprechenden Lagereinrichtung 12 veranlassen. Die entsprechende Lagereinrichtung 12 wird dann aus der Bereitstellungszone 20 in die Bestückungszone 24 transportiert. Der Transport kann zum Beispiel über die Fördertechnik 32 oder mittels einer Transporteinheit 180 erfolgen. Üblicherweise handelt es sich bei den Transporteinheiten 180 um flurgebundene Fahrzeuge mit einem jeweiligen Lastaufnahmemittel, wie es exemplarisch in Fig. 7 dargestellt ist.

Fig. 7 zeigt eine perspektivische Ansicht eines Teils der ersten Bereitstellungszone 20-1 der Fig. 6. In der Fig. 7 sind zwei Shuttle 182-1 und 182-2 gezeigt, die die Transporteinheiten 180 bilden. Jedes der Shuttle 182 verfügt über ein eigenes, vorzugsweise einheitliches, Lastaufnahmemittel (LAM) 184, wie zum Beispiel heb- und senkbare Gabeln. Die Lagereinrichtungen 12 weisen Mittel auf, die eingerichtet sind, mit dem LAM 184 zusammenzuwirken. In der Fig. 7 weisen die Lagereinrichtungen 12 bodenseitig zum Beispiel ein Paar Kufen 186 auf, die U-förmig nach unten offen ausgebildet sind. In diese Kufen 186 können die Shuttle 182 mit ihren LAM 184 einfahren. Wenn das LAM 184 angehoben wird, hebt sich auch die entsprechende Lagereinrichtung 12 an.

Generell ist es bevorzugt, wenn sich eine Teilung der Zonen 20, der Lagereinrichtungen 12 und der LAM 184 an einem Standard orientiert. Man braucht dann nur einen einzigen LAM-Typ, um unterschiedliche Lagereinrichtungstypen an ihren Bereitstellungsorten zu positionieren oder von dort abzuholen. Jeder Lagereinrichtungstyp (z.B. Regal, Palette, Kommissionierautomat, etc.) kann einem beliebigen Bereitstellungsort positioniert werden. Das vereinfacht den Materialfluss, die Auftragsverwaltung, die Platzverwaltung und andere administrative und organisatorische Prozesse, die eingangs bereits beschrieben wurden.

In der Fig. 7 ist eine Situation gezeigt, in der das Regal 170-25 (d.h. das Regal 170 vom Bereitstellungsort "25") vom Shuttle 182-1 abgeholt wird, um in die Bestückungszone 24 zwecks erneuter Bestückung verbracht zu werden. Das Regal 170-24 wurde gerade vom Shuttle 182-2 abgestellt, nachdem es in der Bestückungszone 24 (erneut) bestückt wurde.

Bei einer besonderen Ausgestaltung der Erfindung sorgt die Steuerung 48 dafür, dass auszutauschende Lagereinrichtungen 12 bereits in der Bestückungszone 24 (erneut) bestückt sind, bevor ihr Austauschpartner in der entsprechenden Bereitstellungszone 20 tatsächlich soweit geleert ist, dass ein Austausch erfolgen muss. Es ist besonders bevorzugt, wenn die bereits bestückte Lagereinrichtung 12 bereits in unmittelbarer örtlicher Nähe zur auszutauschenden Lagereinrichtung 12 bereitgestellt wird, so dass der entsprechende Bereitstellungsort innerhalb der entsprechenden Bereitstellungszone 20 so kurzzeitig wie möglich unbesetzt ist.

Zurückkehrend zur Fig. 6 erfolgt die Kommissionierung in der zweiten Bereitstellungszone 20-2, in der vorzugsweise B-Artikel gespeichert sind und kommissioniert werden, manuell nach dem Prinzip "Mann-zur-Ware". Die Bereitstellungszone 20-2 weist wiederum exemplarisch 32 Bereitstellungsorte auf, dieses Mal aber für Fachbodenregale 160. Die Kommissionierung erfolgt wiederum in die Auftragsbehälter 164, die in eine Ausschleusstrecke 162 der Fördertechnik 32 ausgeschleust werden können, während die Kommissionierperson 168 vorzugsweise mit einem Kommissionierwagen 166 durch die Zone 20-2 läuft, um die Artikel gemäß einem Auftrag 90 manuell einzusammeln. Die Auftragsbehälter 164 können auf dem Kommissionierwagen 166 mitgeführt werden. Alternativ können Sammeleinrichtungen (nicht dargestellt) eingesetzt werden, wobei die eingesammelten Artikel anschließend in die geparkten Auftragsbehälter 164 transferiert werden müssen. Wie zuvor im Zusammenhang mit dem Beispiel der Fig. 7 erläutert, können auch die Fachbodenregale 160 durch die Transporteinheiten 180 ausgetauscht werden.

Ferner ist in der Fig. 6 eine weitere, dritte Bereitstellungszone 20-3 gezeigt, die rechts an die erste Bereitstellungszone 20-1 angrenzt. In der dritten Bereitstellungszone 20-3 können z.B. sogenannte A⁺-Artikel bereitgestellt werden. In der dritten Bereitstellungszone 20-3 können zum Beispiel acht Europaletten 190 an den entsprechenden Bereitstellungsorten "1" bis "8" positioniert werden, wobei jede der Europaletten 190 vorzugsweise artikelrein bestückt ist, also ausschließlich Artikel eines einzigen Artikeltyps enthält. Die Kommissionierung erfolgt vorzugsweise manuell nach dem Prinzip "Mann-zur-Ware", wobei im Gegensatz zur zweiten Bereitstellungszone 20-2 die Kommissionierung direkt in die Auftragsbehälter 164 erfolgen kann, wozu die Fördertechnik 32 vorzugsweise in unmittelbarer Nähe der Bereitstellungsplätze der dritten Bereitstellungszone 20-3 verläuft. Bei den A⁺-Artikeln kann es sich um Artikel handeln, die zum Beispiel in einer Sonderangebotsphase sind und besonders häufig in den Kommissionieraufträgen 90 auftauchen. Diese Artikel bekommen nach dem Ende der Angebotsphase wahrscheinlich eine andere Kategorie zugeordnet, was dazu führt, dass sie ab diesem Zeitpunkt in einer anderen Zone 20, möglicherweise auch in einer anderen Art von Lagereinrichtung 12, bereitgestellt werden.

Neben den üblichen Zugriffhäufigkeits-Kategorien (ABC-Struktur) können weitere Kategorie berücksichtigt werden, wie z.B. "blaue Ware", "weiße Ware", gekühlte Artikel, nicht transportable Artikel (non-conveyables) oder Ähnliches. Eine Waschmaschine ist ein Beispiel für "weiße Ware". Wenn man davon ausgeht, dass die Waschmaschine ein C-Artikel ist, könnte sie dennoch in der A⁺-Zone bereitgestellt werden, weil die Waschmaschine auf einer Palette steht. Die Steuerung 48 hat z.B. Kenntnis davon, dass einer der zukünftigen Kommissionieraufträge 90 eine derartige Waschmaschine zur Abarbeitung benötigt. Die Steuerung kann dann dafür sorgen, dass die Waschmaschine, obwohl sie ein C-Artikel ist, vorübergehend in der A⁺-Zone 20-3 bereitgestellt wird. Alternativ könnte die relative große A⁺-Zone 20-3 (logisch), vorzugsweise vorübergehend, in viele kleinere Subzonen aufgeteilt werden, die dann wiederum "kategorierein" wären, also jeweils Artikel einer einzigen Kategorie puffern würden. Aus der A⁺Zone 20-3 der Fig. 6, die acht Bereitstellungsplätze umfasst, könnten (logisch) vorübergehend z.B. acht Subzonen gemacht werden, die jeweils einen einzigen Bereitstellungsplatz umfassen. Das eben erläuterte Beispiel lässt sich auf andere Kriterien/Kategorien anwenden, z.B. auf Artikel, die permanent gekühlt werden müssen ("blaue Ware"), wie z.B. Tiefkülkost.

Es versteht sich, dass die Artikel der Kategorien "C" und "D" vorzugsweise an den in der Fig. 6 nicht gezeigten Arbeitsplätzen 30 (vgl. Fig. 1) kommissioniert werden, die häufig nach dem Prinzip "Ware-zum-Mann" betrieben werden, indem zum Beispiel Lagerbehälter aus einem Zwischenlager zum Arbeitsplatz 30 transportiert werden, wo die Kommissionierpersonen 168 die zu kommissionierenden Artikel manuell entnehmen und in die Auftragsbehälter 164 abgeben können. Die Arbeitsplätze 30 sind dazu vorzugsweise an die Fördertechnik 32 angeschlossen. Es versteht sich, dass über die Fördertechnik 32 alle auftretenden Förderguttypen (z.B. Lagerbehälter, Auftragsbehälter, Paletten, Tablare, etc.) transportiert werden können. Wo es zweckmäßig ist, können auch unterschiedliche Fördertechniktypen für die unterschiedlichen Fördergüter eingesetzt werden. Die Fördertechnik 32 kann auch ausschließlich durch die Transporteinrichtungen 180 implementiert sein.

Es versteht, dass die Steuerung 48 eingerichtet ist, Transportaufträge und/oder Fahraufträge für die Transporteinheiten 18 zu erzeugen, um die Lagereinrichtungen 120 zwischen den Bereitstellungszonen 20 und der Bestückungszone 24 hin und her zu transportieren. Die Steuerung 48 kann zu diesem Zweck sowohl über einen Routenplanungsmodul sowie ein Navigationsmodul verfügen. Die Transporteinheiten 180 weisen jeweils eine Identifikationsnummer auf, um sie adressiert anzusprechen. Die Fahraufträge können in Abhängigkeit von einem aktuellen Betriebszustand des Systems (z.B. Umorganisieren oder Nachschub möglichst in Arbeitspausen oder über Nacht; für einen gepalnten Zeitraum während der Umlagerung werden keine Kommissionieraufträge für die entsprechenden Bereitstellungs- bzw. Kommissionierzonen erstellt, so dass es zu keinen Konflikten kommt) generiert werden.

Die Steuerung 48 kann ferner Füllaufträge generieren, um die (Langzeit-)Läger 28 und 44 erneut zu befüllen, sollte ein bevorrateter Artikeltyp zur Neige gehen.

Fig. 8 zeigt ein Flussdiagramm eines Verfahrens, gemäß dem die Steuerung 48 jeder der Lagereinrichtungen 12 einen Datensatz 130 der Fig. 5 zuordnet.

Dabei wird vorausgesetzt, dass jeder der Lagereinrichtungen 12 zuvor ein individualisierender Kenncode 132, insbesondere in Abhängigkeit vom Lagereinrichtungstyp 142 zugewiesen wurde.

In einem ersten Schritt S10 bekommt die entsprechende Lagereinrichtung 12 ihren Kenncode 132 zugewiesen. Wie zuvor erwähnt, erfolgt dieser Schritt S10 üblicherweise nur ein einziges Mal und wird bei einer erneuten Bestückung der entsprechenden Lagereinrichtung 12 nicht wiederholt.

In einem Schritt S12 bekommt die entsprechende Lagereinrichtung 12 den Zonencode 134 zugewiesen. Es kann vorkommen, dass der entsprechenden Lagereinrichtung 12 im Laufe der Zeit viele verschiedene Zonencodes 134 zugewiesen werden. Der Zonencode 134 ist kategorieabhängig, wie oben erläutert. Die zugeordnete Bereitstellungszone 20 sowie der jeweilige Bereitstellungsort können sich von Bestückungszyklus zu Bestückungszyklus ändern.

In einem Schritt S14 wird der entsprechenden Lagereinrichtung 12 die Bestückungsliste 136 zugewiesen. Die Bestückungsliste 136 ist wiederum abhängig von der Kategorie, die im Wesentlichen durch die Bereitstellungszone 20 bestimmt ist. Es versteht sich, dass die Bestückungsliste 136 (vgl. Fig. 5) nicht zwingend das Datenfeld 154 aufweisen muss, wenn der Zonencode bereits die Kategorie 135 enthält. Umgekehrt gilt, dass der Zonencode 134 nicht zwingend die Kategorie 135 aufweisen muss, wenn die Bestückungsliste 136 die Kategorie 154 enthält.

In einem Schritt S16 wird die entsprechende Lagereinrichtung 12 dann vorzugsweise "kategorierein" in der Bestückungszone 24 bestückt. "Kategorierein" bedeutet, dass die entsprechende Lagereinrichtung 12 in der Regel ausschließlich mit Artikeln einer einzigen Kategorie bestückt wird. Es versteht sich, dass, sollte es im laufenden Betrieb des Systems 10 zu einem Kategoriewechsel bei einem der Artikeltypen kommen, der noch in der oder den Lagereinrichtungen 12 in den Bereitstellungszonen 20 vorhanden ist, die entsprechenden Lagereinrichtungen 12 dann vorübergehend nicht "kategorierein" bestückt sind. Wenn diese restlichen Artikel kommissioniert wurden, sind die entsprechenden Lagereinrichtungen 12 anschließend wieder "kategorierein". Diese kurzzeitige "Durchmischung" der Lagereinrichtungen nimmt die vorliegende Erfindung in Kauf. Ist eine derartige Durchmischung aus besonderen Gründen nicht akzeptabel, so können die entsprechenden Lagereinrichtungen 12 aus ihren Zonen 20 herausgenommen werden, bevor der Kategoriewechsel stattfindet.

In einem Schritt S18 wird die entsprechende Lagereinrichtung 12, nachdem sie bestückt wurde, zu ihrem Zielort transportiert. Der Zielort ist im Zonencode 130 enthalten.

Wenn die entsprechende Lagereinrichtung 12 nach einer gewissen Zeit leer kommissioniert wurde, kann die entsprechende Lagereinrichtung 12 aus ihrer Zone 20 heraustransportiert und in die Bestückungszone 24 verbracht werden, wobei das eben beschriebene Verfahren dann erneut beginnt, vorzugsweise mit dem Schritt S12.

Fig. 9 zeigt ein weiteres Flussdiagramm, das einen Kategoriewechsel bei einem der Artikeltypen darstellt.

In einem Schritt S20, der während des laufenden Betriebs des Systems 10 stattfinden kann, ändert sich die Zugriffshäufigkeitskategorie eines Artikeltyps.

In einem Schritt S22 kann die Steuerung 48 prüfen, ob die Bestückungslisten 136 neu erstellt werden müssen. Dabei können die Bestückungslisten 136 solcher Lagereinrichtungen 12 geprüft werden, die bereits in den Zonen 20 positioniert sind. Es können aber auch die Bestückungslisten 136 geprüft werden, die Lagereinrichtungen 12 zugeordnet sind, die erst in Zukunft bestückt werden sollen.

Wenn die Bestückungsliste 136 aufgrund des Kategoriewechsels neu erstellt werden muss, erfolgt dies in einem Schritt S24. Anderenfalls endet das Verfahren hier.

Wenn im Schritt S24 eine neue Bestückungsliste 136 zu erstellen ist, wird der entsprechende Artikeltyp, dessen Kategorie sich geändert hat, vorzugsweise in eine existierende Bestückungsliste 136 einer anderen Lagereinrichtung 12 transferiert, wie es in Schritt S26 angedeutet ist. Selbstverständlich kann eine vollständige neue Bestückungsliste 136 alternativ generiert werden.

In einem Schritt S28 wird die zugehörige Lagereinrichtung 12 dann gemäß der neuen Bestückungsliste 136 bestückt.

Sobald die Bestückung abgeschlossen ist, wird die entsprechende Lagereinrichtung 12 in einem Schritt S30 an ihrem Bereitstellungsort verbracht, der durch den Zonencode 134 angegeben ist.

Das System zeichnet sich insbesondere durch die folgenden Vorteile aus:
- Das System liefert eine Lösung für häufige Wechsel der ABC-Verteilungen in E-Commerce-Anwendungen.
- Die eingesetzte Technologie ist einfach und dennoch innovativ.
- Eine Umorganisierung des Artikelsortiments in den Kommissionier- bzw. Bereitstellungszonen ist einfach und schnell zu implementieren.
- Die hier präsentierte Lösung ist äußerst flexibel und skalierbar.

### Bezugszeichenliste

- 10: Lager- und Kommissioniersystem
- 12: Lagereinrichtungen
- 14: Regale
- 16: Regalzeilen
- 18: Block
- 20: Bereitstellungszone
- 24: Bestückungszone
- 26: Bestückungsarbeitsplatz
- 28: AKL
- 30: WZM-Arbeitsplatz
- 32: Fördertechnik
- 34: Halle/Gebäude
- 36: Wareneingang (WE)
- 38: Warenausgang (WA)
- 40: Packstation
- 42: Langzeitlager
- 44: Hochregallager (HRL)
- 46: Vereinzelung/Depalettierung
- 48: Steuerung
- 50: Lagerverwaltungsrechner (LWR)
- 60: Kommissioniersteuerung
- 62: Auftragsverwaltung
- 64: Kommissonierleitstrategien
- 66: Pick-by-Voice
- 68: Pick-by-Light
- 70: Pick-by-Vision
- 50': Lagerverwaltung
- 72: Warenwirtschaftssystem
- 76: Materialfluss
- 78: Platzverwaltung
- 80: Kommunikationsbus
- 82: Schnittstellenverwaltung
- 90: (Kommissonier-)Auftrag
- 92: Kopffeld
- 94: Prioritätsfeld
- 96: Artikelfeld
- 98: Auftragszeile
- 100: Stückzahl
- 102: Artikeltyp
- S: Artikeltyp (Variable)
- 110: (Lager-)Platzverwaltungsliste
- 112: Lagerplätznummer/Bereitstellungsort
- 114: Lagerplatzorte (Bereich/Zone)
- 116: Adressen/Speicherplatz
- 118: Kategorie
- 120: Zeile von 110
- 130: Datensatz für 12
- 132: Kenncode von 130
- 134: Zonencode von 130
- 136: Bestückungsliste
- 138: Statuscode
- 140: Identifizierungsnummer
- 142: Lagereinrichtungstyp
- 144: Ebene
- 146: Fach/Kanal
- 148: Speicherplatz
- 150: Artikeltyp
- 152: Anzahl
- 154: Kategorie
- 156: Status/Bestückungszustand
- 160: Fachbodenregal
- 162: Ausschleusstrecke
- 164: Auftragsbehälter
- 166: Kommissionierwagen
- 168: Kommissionierer
- 170: Regal mit Durchlaufkanälen
- 172: FT-Schleifen
- 180: Transporteinheit
- 182: Shuttle
- 184: LAM
- 186: Kufen
- 190: Paletten

## Patentansprüche

1. Lager- und Kommissioniersystem (10), in welchem Artikel unterschiedlicher Zugriffshäufigkeits-Kategorien (154) gespeichert und kommissioniert werden und das aufweist:
eine Vielzahl von Transportfahrzeugen, wobei jedes der Transportfahrzeuge eingerichtet ist, eines der Regale von einem ersten Ort an einen anderen zweiten Ort innerhalb des Systems (10) für eine, insbesondere erneute, Bestückung des entsprechenden Regals mit den Artikeln oder für eine Bereitstellung des entsprechenden Regals zwecks Kommissionierung zu transportieren;
eine erste Bereitstellungszone (20-1), wo solche der Regale an adressierten Bereitstellungsorten (114) angeordnet sind, denen eine erste Zugriffshäufigkeits-Kategorie (118) zugeordnet ist und die im Wesentlichen Artikel der ersten Kategorie (A) speichern;
eine zweite Bereitstellungszone (20-2), wo solche der Regale an adressierte Bereitstellungsorten (114) angeordnet sind, denen eine zweite Zugriffshäufigkeits-Kategorie (B) zugeordnet ist und die im Wesentlichen Artikel der zweiten Kategorie (b) speichern, wobei die zweite Kategorie (B) eine geringere Zugriffshäufigkeit als die erste Kategorie (A) hat;
eine Bestückungszone (24), wo jedes der Regale gemäß einer Bestückungsliste (136), die dem jeweiligen Regal zugeordnet ist, mit den Artikeln erstmals oder erneut bestückbar ist; und
eine Steuerung (48), die angepasst ist, einen Materialfluss (76) innerhalb des Systems (10) und eine Lagerplatzverwaltung (50') des Systems (10) zu regeln, indem:
jedem der Regale ein individualisierender Kenncode (132), eine variable Bestückungsliste (136) und ein Statuscode (138) zugewiesen wird, wobei der Zonencode (134) eine der Zugriffshäufigkeits-Kategorien (154), die dem entsprechenden Regal zugeordnet ist, und genau einen der Bereitstellungsorte (114) in einer der Bereitstellungzonen (20) definiert, welcher die gleiche Zugriffshäufigkeits-Kategorie (118) zugeordnet ist, wobei die Bestückungsliste (136) eine veränderbare Menge von zu speichernden Artikeln definiert, die in dem entsprechenden Regal zu speichern sind, wobei die Bestückungsliste (136) eine oder mehrere zu speichernde Artikeltypen (150) inklusive einem jeweils zugehörigen Speicherplatz (148) und einer jeweils zugehörigen Zugriffshäufigkeits-Kategorie (154) definiert, die zumindest während eines Bestückungsvorgangs der Kategorie (135) entspricht, die dem entsprechenden Regal mittels des Zonencodes (134) zugeordnet ist, und wobei der Statuscode (138) einen Bestückungszustand (156) des entsprechenden Regals angibt; und
Transportaufträge für die Regale in Abhängigkeit von den jeweiligen Statuscodes (156) erzeugt werden, so dass die Regale entweder aus ihrer jeweiligen Bereitstellungszone (20) in die Bestückungszone (24), oder umgekehrt, transportiert werden, wenn die Regale geleert oder vollständig bestückt sind;
**dadurch gekennzeichnet, dass** das Lager- und Kommissioniersystem ferner eine Vielzahl von transportablen Regalen (14; 160; 170) aufweist wobei jedes der Regale eine Vielzahl von adressierten Speicherplätzen (148) aufweist, wo die Artikel innerhalb des jeweiligen Regals für eine Kommissionierung speicherbar sind;
jedem der Regale ein variabler Zonencode (134) zugewiesen wird;
und solche Artikeltypen (102; 150), deren aktuelle Zugriffshäufigkeits-Kategorie (118; 154) sich während eines laufenden Betriebs des System (10) in eine andere, neue Zugriffshäufigkeits-Kategorie (118; 154) ändert, in eine oder mehrere Bestückungslisten (136) solcher Regale transferiert werden, denen die neue Zugriffshäufigkeits-Kategorie (154) zugeordnet ist.

2. System nach Anspruch 1, **dadurch gekennzeichnet, dass** die Regale ein Basisgestell mit genormten Abmessungen aufweisen.

3. System nach Anspruch 1 oder 2, **dadurch gekennzeichnet, dass** die Bestückungszone (24) mindestens einen manuellen oder automatisierten Arbeitsplatz (26) zum Bestücken der Regale aufweist.

4. System nach Anspruch 3, **dadurch gekennzeichnet, dass** mehrere Arbeitsplätze (26) vorgesehen sind, von denen wenigstens einer nur zum Beladen und ein anderer nur zum Entladen der Regale eingerichtet sind.

5. System nach einem der Ansprüche 1 bis 4, **dadurch gekennzeichnet, dass** das System ferner eine Fördertechnik (32) aufweist, die eingerichtet ist, Ladehilfsmittel (164; 190) und/oder die Regale durch das System (10), insbesondere zwischen den Bereitstellungszonen (20) und der Bestückungszone (24), zu transportieren.

6. System nach einem der Ansprüche 1 bis 5, **dadurch gekennzeichnet, dass** der Statuscode (138) zusätzlich eine aktuelle Position der entsprechenden Regale innerhalb des Systems (10) angibt.

7. System nach einem der Ansprüche 1 bis 6, **dadurch gekennzeichnet, dass** das System ferner mindestens ein Langzeitlager (28; 42), vorzugsweise mit integrierter Vereinzelungsstation (46), aufweist.

8. System nach einem der Ansprüche 1 bis 7, **dadurch gekennzeichnet, dass** die Steuerung (48) ferner eingerichtet ist, Fahraufträge für die Transporteinrichtungen (180) in Abhängigkeit von einem Systembetriebszustand, einem Startort, einem Zielort, einer Route und/ oder einem Bereitstellungszeitpunkt zu erzeugen.

9. System nach einem der Ansprüche 1 bis 8, **dadurch gekennzeichnet, dass** die Steuerung (48) ferner eingerichtet ist, eine Anordnung des Artikelsortiments in Bezug auf einen Kommissionierweg und/oder einer Kommissionierzeit zu optimieren.

10. Verfahren zum Umorganisieren eines Lager- und Kommissioniersystems (10), in welchen in Bereitstellungszonen (20) kommissioniert wird, wo im Wesentlichen Artikel einer einzigen Zugriffshäufigkeits-Kategorie bereitgestellt werden, wobei das System (10) vorzugsweise nach einem der Ansprüche 1 bis 9 ausgebildet ist, mit den folgenden Schritten:
Transferieren einer Vielzahl von Regalen zwischen mindestens einer Bestückungszone (24) und mehreren Bereitstellungszonen (20), in denen die Artikel im Wesentlichen kategorierein bereitgestellt werden;
Bestücken der Regale in der mindestens einen Bestückungszone (24) gemäß der jeweiligen Bestückungsliste (136); und
Kommissionieren der Artikel aus den Regalen in den Bereitstellungszonen (20);
**gekennzeichnet durch** Zuordnen eines variablen Zonencodes (134) und einer variablen Bestückungsliste (136) zu jedem der Regale, wobei jede der Bestückungslisten (136) eine veränderbare Gruppe von zu speichernden Artikeln definiert, die in dem entsprechenden Regal zu speichern sind, wobei die Bestückungsliste (136) eine oder mehrere zu speichernde Artikeltypen (150) inklusive einem jeweils zugehörigen Speicherplatz (148) und einer jeweils zugehörigen Zugriffshäufigkeits-Kategorie (154) definiert, die zumindest während eines Bestückungsvorgangs der Kategorie entspricht, die dem entsprechenden Regal mittels des Zonencodes (134) zugeordnet ist;
wobei ein Artikeltyp, dessen Kategorie sich ändert; einer neuen Bestückungsliste eines der Regale zugeordnet wird, dessen Zonencode einer Kategorie entspricht, die der neuen Kategorie des Artikeltyps entspricht, dessen Kategorie sich geändert hat.

11. Verfahren nach Anspruch 10, **dadurch gekennzeichnet, dass** anhand des Statuscodes für jedes der Regale festgestellt wird, ob das entsprechende Regal, erneut zu bestücken ist, und wenn sie erneut zu bestücken ist, wird ein anderes Regal gemäß einer identischen Bestückungsliste (136) in der Bestückungszone (24) bestückt, bevor das erneut zu bestückende Regal tatsächlich ausgetauscht werden muss.

## Claims

1. A storage and picking system (10) where articles of different access-frequency categories (154) are stored and picked, comprising:
a plurality of transport vehicles, wherein each of the transport vehicles is configured to transport one of the racks from a first location to a different second location within the system (10) for filling, in particular re-filling, the corresponding rack with the articles and for providing the corresponding rack for the purpose of picking;
a first provision zone (20-1) where such of the racks are arranged at addressed provision locations (114) which have assigned a first access-frequency category (118) and store substantially articles of the first category (A);
a second provision zone (20-2) where such of the racks are arranged at addressed provision locations (114) which have assigned a second access-frequency category (B) and store substantially articles of the second category (b), wherein the second category (B) has a lower access frequency than the first category (A);
a filling zone (24) where each of the racks can be filled in accordance with a filling list (136), which is assigned to the respective rack, with the articles for the first time or once again; and
a control device (48) adapted to regulate material flow (76) within the system (10) and storage-location administration (50') of the system (10) by:
assigning to each of the racks an individualizing identification code (132), a variable filling list (136), and a status code (138), wherein the zone code (134) defines one of the access-frequency categories (154) being assigned to the corresponding rack and exactly one of the provision locations (114) in one of the provision zones (20) having assigned the same access-frequency category (118), wherein the filling list (136) defines a variable quantity of to-be-stored articles, which are to be stored in the corresponding rack, wherein the filling list (136) defines one or more to-be-stored article types (150) including a respectively associated storage location (148) and a respectively associated access-frequency category (154) which correspond at least during a filling process to the category (135) which is assigned to the corresponding rack by means of the zone code (134), and wherein the status code (138) indicates a filling state (156) of the corresponding rack; and
generating transport orders for the racks dependent on the respective status codes (156) so that the racks are transported either from a respective provision zone (20) thereof into the filling zone (24), or vice versa, if the racks are emptied or completely filled;
**characterized in that** the storage and picking system further comprises a plurality of transportable racks (14; 160; 170), wherein each of the racks comprises a plurality of addressed storage locations (148), where the articles can be stored within the respective rack for the purpose of picking;
assigning a variable zone code (134) to each of the racks;
transferring article types (102; 150) a current access-frequency category (118; 154) of which changes during running operation of the system (10) into a different new access-frequency category (118; 154) to one or more filling lists (136) of such racks which have assigned the new access-frequency category (154).

2. The system of claim 1 **characterized in that** the racks comprise a base frame having standardized dimensions.

3. The system of claim 1 or 2 **characterized in that** the filling zone (24) comprises at least one manual or automated work station (26) for filling the racks.

4. The system of claim 3 **characterized in that** a number of work stations (26) is provided, at least one of which is configured only for filling and another one of which is configured only for unloading the racks.

5. The system of one of claims 1 to 4 **characterized in that** the system further comprises a conveying system (32) configured to transport load supports (164; 190) and/or the racks through the system (10), in particular between the provision zones (20) and the filling zone (24).

6. The system of one of claims 1 to 5 **characterized in that** the status code (138) additionally indicates a current position of the corresponding racks within the system (10).

7. The system of one of claims 1 to 6 **characterized in that** the system further comprises at least one long-term warehouse (28; 42), preferably including an integrated separation station (46).

8. The system of one of claims 1 to 7 **characterized in that** the control device (48) is further configured to generate travel orders for the transport devices (180) dependent on an operation state of the system, starting location, target location, route, and/or time of provision.

9. The system of one of claims 1 to 8 **characterized in that** the control device (48) is further configured to optimize an arrangement of the article assortment with regard to picking path and/or picking time.

10. A method for re-organizing a storage and picking system (10), where picking is performed in provision zones (20), in which picking zones substantially articles of one single access-frequency category are provided, wherein the system (10) is formed preferably according to one of claims 1 to 9, comprising the steps of:
transferring a plurality of racks between at least one filling zone (24) and a number of provision zones (20) where the articles are provided substantially by the same category respectively;
filling the racks in the at least one filling zone (24) in accordance with the respective filling list (136); and
picking the articles from the racks in the provision zones (20);
**characterized by** assigning a variable zone code (134) and a variable filling list (136) to each of the racks, wherein each of the filling lists (136) defines a variable group of to-be-stored articles, which are stored in the respective rack, wherein the filling list (136) defines one or more to-be-stored article types (150) including a respectively associated storage location (148) and a respectively associated access-frequency category (154), which at least during a filling process corresponds to the category assigned to the corresponding rack by the zone code (134);
wherein an article type, a category of which changes, gets assigned a new filling list of one of the racks, the zone code of which corresponds to a category which corresponds to the new category of the article type, the category of which has changed.

11. The method of claim 10 **characterized in that**, based on the status code for each of the racks, it is determined whether the corresponding rack is to be re-filled, and if it is to be re-filled a different rack is filled in accordance with an identical filling list (136) in the filling zone (24), before the rack, which is to be re-filled, actually needs to be exchanged.

## Revendications

1. Système de stockage et de préparation de commandes (10), dans lequel des articles appartenant à différentes catégories de fréquence d'accès (154) sont stockés et préparés et qui comporte :
une pluralité de véhicules de transport, dans lequel chacun des véhicules de transport est conçu pour transporter l'un des rayonnages d'un premier endroit à un autre deuxième endroit au sein du système (10) pour un garnissage, notamment renouvelé, du rayonnage correspondant avec les articles ou pour une préparation du rayonnage correspondant en vue de la préparation des commandes ;
une première zone de préparation (20-1) où ces rayonnages sont disposés à des emplacements de préparation (114) pourvus d'une adresse, auxquels est associée une première catégorie de fréquence d'accès (118) et qui stockent essentiellement des articles de la première catégorie (A) ;
une deuxième zone de préparation (20-2) où ces rayonnages sont disposés à des emplacements de préparation (114) pourvus d'une adresse, auxquels est associée une deuxième catégorie de fréquence d'accès (B) et qui stockent essentiellement des articles de la deuxième catégorie (B), dans lequel la deuxième catégorie (B) présente une plus faible fréquence d'accès que la première catégorie (A) ;
une zone de garnissage (24) où chacun des rayonnages peut être garni avec les articles une première fois ou à nouveau conformément à une liste de garnissage (136) qui est associée au rayonnage respectif ; et
une unité de commande (48) qui est apte à réguler un flux de matériau (76) au sein du système (10) et une gestion des emplacements d'entreposage (50') du système (10), en faisant en sorte que :
un code d'identification individualisé (132), une liste de garnissage variable (136) et un code d'état (138) soient attribués à chacun des rayonnages, dans lequel le code de zone (134) définit l'une des catégories de fréquence d'accès (154) qui est associée au rayonnage correspondant, et, dans l'une des zones de préparation (20), exactement l'un des emplacements de préparation (114), auquel est associée la même catégorie de fréquence d'accès (118), dans lequel la liste de garnissage (136) définit une quantité modifiable d'articles à stocker qui doivent être stockés dans le rayonnage correspondant, dans lequel la liste de garnissage (136) définit un ou plusieurs types d'articles à stocker (150), y compris un emplacement de stockage (148) respectif correspondant et une catégorie de fréquence d'accès (154) respective correspondante qui correspond, au moins pendant un processus de garnissage, à la catégorie (135) qui est associée au rayonnage correspondant au moyen du code de zone (134), et dans lequel le code d'état (138) indique un état de garnissage (156) du rayonnage correspondant ;
et des commandes de transport sont générées pour les rayonnages en fonction du code d'état (156) respectif, de manière à ce que les rayonnages soient transportés soit de leur zone de préparation (20) respective vers la zone de garnissage (24), soit l'inverse, lorsque les rayonnages sont vidés ou entièrement garnis ;
**caractérisé en ce que** le système de stockage et de préparation des commandes comporte en outre une pluralité de rayonnages transportables (14 ; 160 ; 170), dans lequel chacun des rayonnages comporte une pluralité d'emplacements de stockage (148) pourvus d'une adresse où les articles peuvent être stockés dans le rayonnage respectif pour une préparation des commandes ;
un code de zone variable (134) est attribué à chacun des rayonnages ;
et les types d'articles (102 ; 150) dont la catégorie de fréquence d'accès (118 ; 154) actuelle, pendant un fonctionnement en cours du système (10), se transforme en une autre nouvelle catégorie de fréquence d'accès (118 ; 154), sont transférés dans une ou
plusieurs listes de garnissage (136) des rayonnages auxquels est associée la nouvelle catégorie de fréquence d'accès (154).

2. Système selon la revendication 1, **caractérisé en ce que** les rayonnages comportent un bâti de base ayant des dimensions normalisées.

3. Système selon la revendication 1 ou 2, **caractérisé en ce que** la zone de garnissage (24) comporte au moins un emplacement de travail (26) manuel ou automatisé pour garnir les rayonnages.

4. Système selon la revendication 3, **caractérisé en ce qu'**il est prévu plusieurs emplacements de travail (26), parmi lesquels au moins l'un n'est destiné qu'au chargement et dont un autre n'est destiné qu'au déchargement des rayonnages.

5. Système selon l'une quelconque des revendications 1 à 4, **caractérisé en ce que** le système comporte en outre un dispositif de convoyage (32) qui est conçu pour transporter des outils de chargement (164 ; 190) et/ou les rayonnages à travers le système (10), notamment entre les zones de préparation (20) et la zone de garnissage (24).

6. Système selon l'une quelconque des revendications 1 à 5, **caractérisé en ce que** le code d'état (138) indique en outre une position actuelle des rayonnages correspondants dans le système (10).

7. Système selon l'une quelconque des revendications 1 à 6, **caractérisé en ce que** le système comporte en outre au moins un système de stockage à long terme (28 ; 42), ayant de préférence un poste d'individualisation (46) intégré.

8. Système selon l'une quelconque des revendications 1 à 7, **caractérisé en ce que** l'unité de commande (48) est en outre conçue pour générer des commandes de déplacement pour les dispositifs de transport (180) en fonction d'un état de fonctionnement du système, d'un point de départ, d'une destination, d'un itinéraire et/ou d'un instant de préparation.

9. Système selon l'une quelconque des revendications 1 à 8, **caractérisé en ce que** l'unité de commande (48) est en outre conçue pour optimiser un agencement de la gamme d'articles par rapport à un trajet de préparation des commandes et/ou à un temps de préparation des commandes.

10. Procédé de réorganisation d'un système de stockage et de préparation des commandes (10), dans lequel des commandes sont préparées dans des zones de préparation (20), où des articles d'une seule catégorie de fréquence d'accès sont essentiellement préparés, dans lequel le système (10) est de préférence réalisé selon l'une quelconque des revendications 1 à 9, comportant les étapes consistant à :
transférer une pluralité de rayonnages entre au moins une zone de garnissage (24) et plusieurs zones de préparation (20) dans lesquelles les articles sont essentiellement préparés selon des catégories ;
garnir les rayonnages dans l'au moins une zone de garnissage (24) conformément à la liste de garnissage (136) respective ; et
préparer les commandes des articles provenant des rayonnages dans les zones de préparation (20) ;
**caractérisé par** le fait d'associer un code de zone variable (134) et une liste de garnissage (136) variable à chacun des rayonnages, dans lequel chacune des listes de garnissage (136) définit un groupe modifiable d'articles à stocker qui doivent être stockés dans le rayonnage correspondant, dans lequel la liste de garnissage (136) définit un ou plusieurs types d'articles à stocker (150), y compris un emplacement de stockage (148) respectif correspondant et une catégorie de fréquence d'accès (154) respective correspondante qui correspond, au moins pendant un processus de garnissage, à la catégorie qui est associée au moyen du code de zone (134) au rayonnage correspondant ;
dans lequel un type d'article dont la catégorie se transforme est associé à une nouvelle liste de garnissage de l'un des rayonnages, dont le code de zone correspond à une catégorie qui correspond à la nouvelle catégorie du type d'article, dont la catégorie s'est transformée.

11. Procédé selon la revendication 10, **caractérisé en ce que**, sur la base du code d'état pour chacun des rayonnages, il est déterminé si le rayonnage correspondant doit de nouveau être garni et lorsqu'il doit de nouveau être garni, un autre rayonnage est garni dans les zones de garnissage (24) conformément à une liste de garnissage (136) identique, avant que le rayonnage devant de nouveau être garni ne doive effectivement être remplacé.
